# EUROPÄISCHE PATENTSCHRIFT

(11) **EP 2 954 223 B1**
(45) Veröffentlichungstag und Bekanntmachung des Hinweises auf die Patenterteilung: **30.09.2020**
(21) Anmeldenummer: 14702865.8
(22) Anmeldetag: 06.02.2014
(51) Int. Cl.: F16F 15/123, F16F 15/14, F16H 45/02

(54) **SCHWINGUNGSDÄMPFUNGSANORDNUNG, VORZUGSWEISE FÜR DEN ANTRIEBSSTRANG EINES FAHRZEUGS**
VIBRATION DAMPER ASSEMBLY, IN PARTICULAR FOR THE POWER TRAIN OF A VEHICLE
ENSEMBLE AMORTISSEUR DE VIBRATIONS, DE PRÉFÉRENCE POUR LA CHAÎNE CINÉMATIQUE D'UN VÉHICULE

(30) Priorität: 08.02.2013 DE 102013202131; 09.01.2014 WO PCT/EP2014/050291
(43) Veröffentlichungstag der Anmeldung: 16.12.2015
(73) Patentinhaber: ZF Friedrichshafen AG, 88046 Friedrichshafen (DE)
(72) Erfinder: WICKEL, Christian, 97797 Wartmannsroth (DE); KRAM, Matthias, 97332 Volkach (DE); PITTNER, Daniel, 97218 Gerbrunn (DE); HAMMER, Peter, 97421 Schweinfurt (DE)
(74) Vertreter: ZF Friedrichshafen AG
(86) Internationale Anmeldenummer: PCT/EP2014/052301
(87) Internationale Veröffentlichungsnummer: WO 2014/122201

(56) Entgegenhaltungen:
- WO-A2-2012/089190
- DE-A1-102008 057 647
- DE-A1-102009 002 481
- DE-A1-102011 011 469
- US-A1- 2012 111 683

## Beschreibung

Die vorliegende Erfindung betrifft eine Schwingungsdämpfungsanordnung, vorzugsweise für den Antriebsstrang eines Fahrzeugs, umfassend eine Torsionsdämpferanordnung, umfassend einen ersten Torsionsschwingungsdämpfer mit einer zur Drehmomentübertragung mit einem Antriebsorgan gekoppelten oder koppelbaren ersten Primärseite und einer gegen die Rückstellwirkung einer ersten Dämpferelementenanordnung um eine Drehachse bezüglich der ersten Primärseite drehbaren ersten Sekundärseite sowie einen zweiten Torsionsschwingungsdämpfer mit einer mit der ersten Sekundärseite verbundenen zweiten Primärseite und einer gegen die Rückstellwirkung einer zweiten Dämpferelementenanordnung um die Drehachse bezüglich der zweiten Primärseite drehbaren und zur Drehmomentübertragung mit einem Abtriebsorgan gekoppelten oder koppelbaren zweiten Sekundärseite sowie eine Auslenkungsmassenpendelanordnung, umfassend einen Auslenkungsmassenträger und eine Auslenkungsmassenanordnung mit wenigstens einer am Auslenkungsmassenträger aus einer Neutral-Relativlage auslenkbar getragenen Auslenkungsmasse.

Die WO 2012/089190 A2 beschreibt eine Fliehkraftpendeleinrichtung mit einem Pendelflansch und mit wenigstens zwei beidseitig des Pendelflansches mittels eines in einem Ausschnitt des Pendelflansches aufgenommenen Abstandsbolzens zu einem Pendelmassenpaar befestigten Pendelmassen. Das Pendelmassenpaar ist mittels wenigstens zwei Abrollelementen gegenüber dem Pendelflansch geführt und begrenzt verschwenkbar. Die Abrollelemente in Führungsbahnen in den Pendelmassen und in komplementär geformten Führungsbahnen sind in dem Pendel-flansch aufgenommen und abrollbar. Der Abstandsbolzen ist in seinem durch den Ausschnitt in dem Pendelflansch greifenden axialen Bereich mit einem Dämpfungsmittel zur Dämpfung eines Anschlagens des Abstandsbolzens an dem Ausschnitt ausgestattet. Eine Einfederung des Dämpfungsmittels kann durch ein Anschlagen eines Abrollelements an der das Abrollelement aufnehmenden Führungsbahn begrenzt werden.

Die DE 10 2009 002481 A1 beschreibt eine hydrodynamische Kopplungsanordnung, insbesondere Drehmomentwandler, umfassend ein an eine Antriebswelle koppelbares Gehäuse mit einem Pumpenrad, ein in einem Innenraum des Gehäuses angeordnetes vom Pumpenrad antreibbares Turbinenrad und eine erste Dämpferanordnung über welche das Gehäuse mittels einer Überbrückungskupplung mit einem Abtriebsorgan koppelbar ist, wobei die erste Dämpferanordnung einen ersten Torsionsschwingungsdämpfer mit einer mit der Überbrückungs-kupplung verbundenen ersten Primärseite und einer gegen die Wirkung einer ersten Dämpferfederanordnung bezüglich der ersten Primärseite um eine Drehachse drehbaren ersten Sekundärseite sowie einen zweiten Torsionsschwingungsdämpfer mit einer mit der ersten Sekundärseite des ersten Torsionsschwingungsdämpfers verbundenen zweiten Primärseite und einer gegen die Wirkung einer zweiten Dämpferfederanordnung bezüglich der zweiten Primärseite um die Drehachse drehbaren zweiten Sekundärseite umfasst, wobei das Turbinenrad mit einem die erste Sekundärseite und die zweite Primärseite umfassenden Torsionsschwingungsdämpfer-Zwischenbereich verbunden ist.

Die DE 10 2011 011469 A1 beschreibt eine Dämpfereinheit, umfassend zumindest zwei in Reihe geschaltete und in radialer Richtung versetzt zueinander angeordnete Dämpfer mit jeweils zumindest zwei koaxial zueinander angeordneten, in Umfangsrichtung relativ zueinander begrenzt verdrehbaren und über Federeinheiten miteinander gekoppelten Dämpferteilen, und einen drehzahladaptiven Tilger, der mit der Verbindung zwischen den beiden Dämpfern gekoppelt ist.

Die DE 10 2008 057647 A1 betrifft eine Kraftübertragungsvorrichtung zur Leistungsübertragung zwischen einem Antrieb und einem Abtrieb, mit zumindest einem Eingang und einem Ausgang und einer in einem zumindest teilweise mit einem Betriebsmedium, insbesondere Öl, befüllbaren Raum angeordneten Vorrichtung zur Dämpfung von Schwingungen, die mit einem drehzahl-adaptiven Tilger gekoppelt ist. Die Erfindung ist dadurch gekennzeichnet, dass der drehzahladaptive Tilger in Abhängigkeit des Ölflusses auf eine effektive Ordnung ausgelegt ist, die um einen Ordnungsverschiebungswert größer als die Ordnung der anregenden Schwingung des Antriebes ist.

Die US 2012/0111683 A1 beschreibt eine Startvorrichtung mit einem Überbrückungskupplungs-mechanismus, einer Flüssigkeitskupplung, einem Federdämpfer mit einer Feder, einem Kraftübertragungsabschnitt, der die Kraft von dem Überbrückungskupplungsmechanismus auf die Feder überträgt, und einem Kraftausgangsabschnitt, der die Kraft von der Feder auf eine Eingangswelle überträgt, und einem Pendeldämpfer mit einem Pendel und einem Pendelkraftübertragungsabschnitt, der die Kraft von dem Federdämpfer auf das Pendel überträgt. Der Abtriebsabschnitt der Überbrückungskupplung, der Pendeldämpfer, der Federdämpfer und die Flüssigkeitskupplung sind in dieser Reihenfolge von einem Motor in axialer Richtung nacheinander angeordnet. Der Ausgang des Überbrückungskupplungsmechanismus und der Ausgang des Federdämpfers sind auf der Außenumfangsseite des Pendeldämpfers miteinander verbunden, und der Ausgang des Federdämpfers und der Übertragungsabschnitt der Pendelkraft sind auf der Innenumfangsseite des Pendels miteinander verbunden.

Aus der DE 10 2008 057 648 A1 ist eine Schwingungsdämpfungsanordnung bekannt, welche in einen hydrodynamischen Drehmomentwandler integriert ein Drehmoment zwischen einer Überbrückungskupplung und einer Abtriebsnabe überträgt. Die Schwingungsdämpfungsanordnung ist mit einer Torsionsdämpferanordnung aufgebaut, die zwei zueinander seriell wirksame und im Wesentlichen radial gestaffelte Torsionsschwingungsdämpfer umfasst. Eine erste Primärseite eines radial weiter außen positionierten ersten Torsionsschwingungsdämpfers ist an die Ausgangsseite der Überbrückungskupplung angekoppelt. Eine Sekundärseite des weiter radial innen positionierten zweiten Torsionsschwingungsdämpfers ist mit der Abtriebsnabe verbunden. Die erste Sekundärseite des ersten Torsionsschwingungsdämpfers und die zweite Primärseite des zweiten Torsionsschwingungsdämpfers bilden zusammen eine Zwischenmassenanordnung, mit welcher einerseits das Turbinenrad des hydrodynamischen Drehmomentwandlers und andererseits ein Auslenkungsmassenträger einer Auslenkungsmassenpendelanordnung fest verbunden sind. An diesem Auslenkungsmassenträger sind in Umfangsrichtung verteilt mehrere Auslenkungsmassen getragen. Die Auslenkungsmassen sind im Rotationszustand durch die Fliehkraft nach radial außen vorbelastet und bewegen sich bei Auftreten von Drehschwingungen ausgehend von einer Neutral-Relativlage bezüglich des Auslenkungsmassenträgers im Fliehpotential nach radial innen.

Durch die Kombination einer insbesondere auch mehrstufig arbeitenden Torsionsdämpferanordnung und einer Auslenkungsmassenpendelanordnung werden beispielsweise Schwingungsdämpfungseffekte erreicht. Die Torsiondämpferanordnung, welche allgemein auch als Festfrequenzdämpfer bezeichnet werden kann, ist auf eine oder ggf. mehrere fest definierte Anregungsfrequenzen abgestimmt und somit primär dazu vorgesehen, bei diesen bekannten bzw. fest vorgegebenen Frequenzen auftretende Schwingungsanregungen zu eliminieren. Die Auslenkungsmassenpendelanordnung, welche allgemein auch als drehzahladaptiver Tilger bezeichnet werden kann, ist auf eine oder ggf. mehrere Anregungsordnungen einer drehzahlabhängig sich ändernden Anregungsfrequenz, beispielsweise der Zündfrequenz, abgestimmt, so dass die Eigenfrequenz bzw. die Eigenfrequenzen der Auslenkungsmassenpendelanordnung mit der Drehzahl variieren, so dass die Abstimmung im Wesentlichen im gesamten Drehzahlspektrum beibehalten bleibt.

Es ist die Aufgabe der vorliegenden Erfindung, bekannte Schwingungsdämpfungsanordnungen mit einer Torsionsdämpferanordnung und einer Auslenkungsmassenpendelanordnung zu verbessern.

Gelöst wird diese Aufgabe mit einer Schwingungsdämpfungsanordnung nach dem unabhängigen Anspruch. Vorteilhafte Weiterbildungen sind Gegenstand der abhängigen Ansprüche.

Bei einer Schwingungsdämpfungsanordnung, vorzugsweise für den Antriebsstrang eines Fahrzeugs, umfassend eine Torsionsdämpferanordnung, umfassend einen ersten Torsionsschwingungsdämpfer mit einer zur Drehmomentübertragung mit einem Antriebsorgan gekoppelten oder koppelbaren ersten Primärseite und einer gegen die Rückstellwirkung einer ersten Dämpferelementenanordnung um eine Drehachse bezüglich der ersten Primärseite drehbaren ersten Sekundärseite sowie einen zweiten Torsionsschwingungsdämpfer mit einer mit der ersten Sekundärseite verbundenen zweiten Primärseite und einer gegen die Rückstellwirkung einer zweiten Dämpferelementenanordnung um die Drehachse bezüglich der zweiten Primärseite drehbaren und zur Drehmomentübertragung mit einem Abtriebsorgan gekoppelten oder koppelbaren zweiten Sekundärseite, sowie eine Auslenkungsmassenpendelanordnung, umfassend einen Auslenkungsmassenträger und eine Auslenkungsmassenanordnung mit wenigstens einer am Auslenkungsmassenträger aus einer Neutral-Relativlage auslenkbar getragenen Auslenkungsmasse wird, gemäß einem ersten Aspekt der vorliegenden Erfindung dadurch, dass die erste Dämpferelementenanordnung eine Mehrzahl von in Umfangsrichtung aufeinander folgenden und zueinander parallel wirkenden ersten Dämpferelementeneinheiten umfasst oder/und dass die zweite Dämpferelementenanordnung eine Mehrzahl von in Umfangsrichtung aufeinander folgenden und zueinander parallel wirkenden zweiten Dämpferelementeneinheiten umfasst, und dass ein Verhältnis der Anzahl der ersten Dämpferelementeneinheiten oder/und der Anzahl der zweiten Dämpferelementeneinheiten zur Anzahl der Auslenkungsmassen der Auslenkungsmassenanordnung im Bereich von 0,6 bis 1,7, vorzugsweise 0,8 bis 1,3, liegt.

Durch das Bereitstellen dieses Verhältnisses im angegebenen Wertebereich wird eine optimierte Abstimmung der beiden zur Schwingungsdämpfung bzw. Eliminierung beitragenden Systembereiche aufeinander erreicht.

Gemäß einem weiteren Aspekt der vorliegenden Erfindung kann alternativ oder zusätzlich zu dem vorangehend angegebenen Verhältnis vorgesehen sein, dass ein Verhältnis der Steifigkeit der ersten Dämpferelementenanordnung zur Steifigkeit der zweiten Dämpferelementenanordnung kleiner als 1,2, vorzugsweise kleiner als 1 ist.

Die im Bereich einer jeweiligen Dämpferelementenanordnung vorgesehene Steifigkeit kann beispielsweise als die Federkonstante bzw. eine Gesamtfederkonstante der Dämpferelementenanordnung betrachtet werden, wenn diese mit einer Mehrzahl von beispielsweise auch ineinander geschachtelten oder in Umfangsrichtung aufeinander folgenden und bezüglich einander abgestützten Dämpferelementen, beispielsweise Federn, ausgebildet ist. Insbesondere dann, wenn der erste Torsionsschwingungsdämpfer bzw. dessen Dämpferelementenanordnung weiter radial außen positioniert ist, als der zweite Torsionsschwingungsdämpfer bzw. dessen Dämpferelementenanordnung, kann im Bereich der ersten Dämpferelementenanordnung der vergleichsweise große dort zur Verfügung stehende Bauraum genutzt werden, Dämpferelemente mit vergleichsweise geringer Steifigkeit einzusetzen, wodurch eine deutliche Verbesserung in der Entkopplungsgüte erreicht werden kann.

Gemäß einem weiteren Aspekt der vorliegenden Erfindung kann alternativ oder zusätzlich zu den vorangehend angegebenen Verhältnissen vorgesehen sein, dass ein Verhältnis eines Maximaldrehmoments der ersten Dämpferelementenanordnung zu einem Maximaldrehmoment der zweiten Dämpferelementenanordnung im Bereich von 0,8 bis 1,2, vorzugsweise 0,9 bis 1,1, am meisten bevorzugt bei etwa 1, liegt, wobei das Maximaldrehmoment einer Dämpferelementenanordnung ein im Bereich der elastischen Wirksamkeit der Dämpferelementenanordnung derselben maximal übertragbares Drehmoment ist.

Durch diese Ausgestaltung der Maximaldrehmomente der beiden Dämpferelementenanordnungen bzw. deren Verhältnis zueinander wird gewährleistet, dass beide Dämpferelementenanordnungen im Wesentlichen das gleiche Maximaldrehmoment übertragen können und somit beispielsweise im gesamten zu übertragenden Drehmomentenbereich im Bereich ihrer Elastizität arbeiten können. Es ist hier darauf hinzuweisen, dass das Maximaldrehmoment einer jeweiligen Dämpferelementenanordnung dadurch vorgegeben sein kann, dass bei Erreichen desselben eine weitere Relativdrehung zwischen der Primärseite und der Sekundärseite des betroffenen Torsionsschwingungsdämpfers beispielsweise durch Wirksamwerden eines Anschlags nicht mehr möglich ist.

Gemäß einem weiteren Aspekt der vorliegenden Erfindung kann alternativ oder zusätzlich zu den vorangehenden Verhältnissen vorgesehen sein, dass ein Verhältnis eines Maximaldrehmoments der ersten Dämpferelementenanordnung zu einem von einem Antriebsaggregat in die Schwingungsdämpfungsanordnung einleitbaren Maximalantriebsdrehmoment im Bereich von 1,1 bis 1,4, vorzugsweise 1,15 bis 1,35, am meisten bevorzugt 1,2 bis 1,22, liegt.

Insbesondere dann, wenn die erste Dämpferelementenanordnung als die weichere, also mit geringerer Steifigkeit ausgebildete Dämpferelementenanordnung bereitgestellt ist, wird gewährleistet, dass im gesamten Spektrum des in einem Antriebsaggregat abgebbaren Drehmoments, also insbesondere Antriebsdrehmoments, die erste Dämpferelementenanordnung im Bereich ihrer Elastizität arbeiten kann. Gemäß einem weiteren Aspekt der vorliegenden Erfindung kann alternativ oder zusätzlich zu den vorangehend definierten Verhältnissen vorgesehen sein, dass ein Verhältnis eines maximalen Relativdrehwinkels zwischen der ersten Primärseite und der ersten Sekundärseite, ausgehend von einer Neutral-Relativdrehlage der ersten Primärseite bezüglich der ersten Sekundärseite, in wenigstens einer Relativdrehrichtung, vorzugsweise mit Drehmomentflussrichtung von der ersten Primärseite zur zweiten Sekundärseite, zu einem maximalen Auslenkungswinkel wenigstens einer Auslenkungsmasse aus der Neutral-Relativlage bezüglich des Auslenkungsmassenträgers im Bereich von 1,3 bis 10, vorzugsweise im Bereich von 1,5 bis 7,5, liegt.

Durch das Bereitstellen eines Verhältnisses der jeweiligen maximalen Auslenkungswinkel wird gleichermaßen eine optimierte Abstimmung der Torsionsschwingungsdämpferanordnung und der Auslenkungsmassenpendelanordnung aufeinander gewährleistet und insbesondere sichergestellt, dass im gesamten Arbeitsbereich einer der Anordnungen auch die andere noch dämpfend bzw. schwingungstilgend wirksam sein kann.

Gemäß einem weiteren Aspekt der vorliegenden Erfindung kann alternativ oder zusätzlich zu den vorangehend angegebenen Verhältnissen vorgesehen sein, dass das Verhältnis eines mittleren Reibradius einer Kupplungsanordnung zur Kopplung der ersten Primärseite mit dem Antriebsorgan zu einem Radialabstand des Massenschwerpunks wenigstens einer Auslenkungsmasse zur Drehachse in der Neutral-Relativlage größer als 0,8, vorzugsweise größer als 0,95, ist.

Mit derartiger Ausgestaltung wird gewährleistet, dass insbesondere in der Auslenkungsmassenpendelanordnung durch Positionierung der wenigstens einen Auslenkungsmasse derselben vergleichsweise weit radial außen die im Rotationsbetrieb auftretende Fliehkraft bzw. die Auslenkung einer Auslenkungsmasse im Fliehpotential effizient genutzt wird.

Gemäß einem weiteren Aspekt der vorliegenden Erfindung kann alternativ oder zusätzlich zu den vorangehend angegebenen Verhältnissen vorgesehen sein, dass das Verhältnis eines Radialabstands des Massenschwerpunkts wenigstens einer Auslenkungsmasse zur Drehachse in der Neutral-Relativlage zu dem Außendurchmesser eines hydrodynamischen Kreislaufs einer die Schwingungsdämpfungsanordnung enthaltenden hydrodynamischen Kopplungsvorrichtung, vorzugsweise Drehmomentwandler, im Bereich von 0,3 bis 0,5 liegt.

Auch mit dieser baulichen Maßnahme wird eine optimale Ausnutzung des insbesondere in radialer Richtung zur Verfügung stehenden Bauraums für die Auslenkungsmassenpendelanordnung und somit ein optimiertes Tilgungsverhalten derselben erreicht.

Gemäß einem weiteren Aspekt der vorliegenden Erfindung kann alternativ oder zusätzlich zu den vorangehend angegebenen Verhältnissen vorgesehen sein, dass das Verhältnis einer axialen Breite eines hydrodynamischen Kreislaufs einer die Schwingungsdämpfungsanordnung enthaltenden hydrodynamischen Kopplungsvorrichtung, vorzugsweise Drehmomentwandler, zur axialen Breite wenigstens einer Auslenkungsmasse im Bereich von 2,5 bis 7,5, vorzugsweise 2,75 bis 6,9, liegt.

Liegt dieses Verhältnis im angegebenen Wertebereich, ist gewährleistet, dass bei Integration eines drehzahladaptiven Tilgers, also einer Auslenkungsmassenpendelanordnung, in eine hydrodynamische Kopplungsvorrichtung ausreichend axialer Bauraum für den hydrodynamischen Kreislauf derselben zur Verfügung steht bzw. genutzt wird.

Um die in Antriebssträngen von Fahrzeugen allgemein zu übertragenden Drehmomente im Bereich der elastischen Wirksamkeit der Torsionsschwingungsdämpferanordnung übertragen zu können, wird vorgeschlagen, dass eine Steifigkeit der ersten Dämpferelementenanordnung im Bereich von 10 bis 25 Nm/° liegt oder/und eine Steifigkeit der zweiten Dämpferelementenanordnung im Bereich von 10 bis 55 Nm/° liegt.

Bei einer Ausgestaltung der Torsionsschwingungsdämpferanordnung wird vorgeschlagen, dass die erste Dämpferelementenanordnung im gesamten Relativdrehwinkelbereich der ersten Primärseite bezüglich der ersten Sekundärseite in wenigstens einer Relativdrehrichtung, vorzugsweise mit Drehmomentflussrichtung von der ersten Primärseite zur zweiten Sekundärseite, eine im Wesentlichen konstante Steifigkeit aufweist, oder/und dass die zweite Dämpferelementenanordnung im gesamten Relativdrehwinkelbereich der zweiten Primärseite bezüglich der zweiten Sekundärseite in wenigstens einer Relativdrehrichtung, vorzugsweise mit Drehmomentenflussrichtung von der ersten Primärseite zur zweiten Sekundärseite, eine im Wesentlichen konstante Steifigkeit aufweist. Eine derartige Ausgestaltung bedeutet also, dass zumindest eine der Dämpferelementenanordnungen im Wesentlichen einstufig, also mit einer Auslenkungswinkel-Drehmoment-Kennlinie im Wesentlichen ohne Knick oder Krümmungsbereich ausgebildet ist, wodurch insbesondere abrupte Steifigkeitsübergänge vermieden werden.

Bei einer alternativen Ausgestaltung wird vorgeschlagen, dass die erste Dämpferelementenanordnung eine vom Relativdrehwinkel der ersten Primärseite bezüglich der ersten Sekundärseite in wenigstens einer Relativdrehrichtung, vorzugsweise mit Drehmomentenfluss von der ersten Primärseite zur zweiten Sekundärseite, abhängige Steifigkeit aufweist, oder/und dass die zweite Dämpferelementenanordnung eine vom Relativdrehwinkel der zweiten Primärseite bezüglich der zweiten Sekundärseite in wenigstens einer Relativdrehrichtung, vorzugsweise mit Drehmomentenfluss von der ersten Primärseite zur zweiten Sekundärseite, abhängige Steifigkeit aufweist. Insbesondere kann dabei vorgesehen sein, dass mit zunehmender Auslenkung, also zunehmendem Relativdrehwinkel, die Steifigkeit zunimmt, um eine erhöhte Sicherheit gegen das Erreichen einer Endanschlagposition zu gewährleisten.

Ist eine derartige abhängig vom Relativdrehwinkel und somit vom zu übertragenden Drehmoment sich ändernde Steifigkeit bei zumindest einer der Dämpferelementenanordnung vorgesehen, so kann bei dem Verhältnis der Steifigkeit der ersten Dämpferelementenanordnung zur Steifigkeit der zweiten Dämpferelementenanordnung wenigstens eine Steifigkeit eine mittlere Steifigkeit sein.

Um den beispielsweise in einer hydrodynamischen Kopplungsvorrichtung zur Verfügung stehenden Bauraum optimal auszunutzen, wird vorgeschlagen, dass die erste Dämpferelementenanordnung eine Mehrzahl von in Umfangsrichtung aufeinander folgenden und zueinander parallel wirkenden ersten Dämpferelementeneinheiten umfasst, dass die zweite Dämpferelementenanordnung eine Mehrzahl von in Umfangsrichtung aufeinander folgenden und zueinander parallel wirkenden zweiten Dämpferelementeneinheiten umfasst und dass die Auslenkungsmassenanordnung eine Mehrzahl von in Umfangsrichtung aufeinander folgenden Auslenkungsmassen umfasst.

Dabei kann die Anzahl der ersten Dämpferelementeneinheiten der Anzahl der zweiten Dämpferelementeneinheiten entsprechen, oder/und kann die Anzahl der Auslenkungsmassen der Anzahl der ersten Dämpferelementeneinheiten oder/und der Anzahl der zweiten Dämpferelementeneinheiten entsprechen. Eine derartige Bauweise bietet sich insbesondere dann an, wenn die erste Sekundärseite oder/und die zweite Primärseite wenigstens ein die ersten Dämpferelementeneinheiten oder/und die zweiten Dämpferelementeneinheiten abstützendes, vorzugsweise scheibenartiges Drehmomentübertragungselement umfasst und der Auslenkungsmassenträger wenigstens ein Drehmomentübertragungselement umfasst. Dies bedeutet, dass die Auslenkungsmassenpendelanordnung bzw. deren Auslenkungsmassenträger baulich integriert ist in die Torsionsschwingungsdämpferanordnung bzw. eine Zwischenmassenanordnung zwischen den beiden Dämpferelementeneinheiten derselben. Dies führt zu Bauraumeinsparungen. Das Vorsehen einer gleichen Anzahl an Auslenkungsmassen einerseits und Dämpferelementeneinheiten andererseits führt zu einer Schwachpunkte in den drehmomentübertragenden Bauteilen vermeidenden Ausgestaltung.

Alternativ bzw. auch zusätzlich kann vorgesehen sein, dass die Anzahl der Auslenkungsmassen sich von der Anzahl der ersten Dämpferelementeneinheiten oder/und der Anzahl der zweiten Dämpferelementeneinheiten unterscheidet. Mit derartiger Ausgestaltung wird eine größere Freiheit in der Abstimmung der Torsionsschwingungsdämpferanordnung einerseits bzw. der Auslenkungsmassenpendelanordnung andererseits auf jeweilige anregende Frequenzen bzw. Ordnungen erreicht.

Um bei einem derartigen Aufbau Schwachpunkte in drehmomentübertragenden Bauteilen zu vermeiden, wird vorgeschlagen, dass die erste Sekundärseite oder/und die zweite Primärseite wenigstens ein die ersten Dämpferelementeneinheiten oder/und die zweiten Dämpferelementeneinheiten abstützendes, vorzugsweise scheibenartiges Drehmomentübertragungselement umfasst und dass der Auslenkungsmassenträger von dem wenigstens einen Drehmomentübertragungselement getrennt ausgebildet und mit diesem verbunden ist.

Eine hinsichtlich einer Schwingungsentkopplung günstige Ausgestaltung kann dadurch erreicht werden, dass eine Zwischenmassenanordnung zwischen der ersten Dämpferelementenanordnung und der zweiten Dämpferelementenanordnung die erste Sekundärseite, die zweite Primärseite und die Auslenkungsmassenpendelanordnung umfasst.

Ausführungsbeispiele betreffen eine Schwingungsdämpfungsanordnung mit einem Stützbauteil, das als radial äußerer Anschlag für zumindest eine Dämpferelementeneinheit einer radial außen liegenden Dämpferelementenanordnung dient. Das Stützbauteil umfasst eine freie Endstruktur, die sich weiter in eine axiale Richtung als die Dämpferelementeneinheit erstreckt. Bei manchen Ausführungsbeispielen kann so ermöglicht werden, dass ein Bereich, an dem eine höchste Spannung in dem Stützbauteil auftritt, nicht an einer Kante des Stützbauteils oder der freien Endstruktur liegt. Ein Verschleiß des Stützbauteil und/oder dessen Kante könnte so unter Umständen vermieden oder zumindest reduziert sein. Ferner kann durch die Verlagerung des spannungshöchsten Bereichs weg von der Kante des Stützbauteils das Stützbauteil bei manchen Ausführungsbeispielen auch mit einer geringeren Stärke beispielsweise von 2 mm hergestellt werden. Bei manchen Ausführungsbeispielen können dann eventuell Dämpferelementeneinheiten oder Federn eingesetzt werden, die größer sind oder einen größeren Durchmesser aufweisen. Als Material kann unter Umständen ein Blech verwendet werden. Ein Gewicht des Stützbauteils und damit eventuell auch das der Schwingungsdämpfungsanordnung könnte durch diese Maßnahme ebenfalls reduziert werden. Durch die Ausbildung der freien Endstruktur kann in manchen Fällen auch eine Herstellung des Stützbauteils vereinfacht werden.

Bei einigen weiteren Ausführungsbeispielen schließt die freie Endstruktur an einen Anlagebereich des Stützbauteils an. Zwischen der Endstruktur und dem Anlagebereich kann ein Radius ausgebildet sein. Durch das Vorsehen des Radius zwischen der freien Endstruktur und dem Anlagebereich kann die Herstellung des Stützbauteils bei manchen Ausführungsbeispielen vereinfacht werden. In dem Anlagebereich des Stützbauteils kann zumindest bei manchen Betriebszuständen zumindest eine Dämpferelementeneinheit anliegen. Beispielsweise kann der Anlagebereich dazu zumindest an seiner nach radial innen gerichteten Seite eine Form aufweisen, die einer nach radial außen gerichteten Form des Dämpferelements oder der Dämpferelementeneinheit entspricht.

Ergänzend oder alternativ ist die freie Endstruktur bei manchen Ausführungsbeispielen einstückig an das Stützbauteil angeformt oder einstückig mit diesem als Blechteil ausgebildet. Dadurch könnte unter Umständen das Vorsehen von Verbindungsmitteln entfallen und ein gewünschter Spannungsverlauf in dem Bauteil erreicht werden.

Ergänzend oder alternativ erstreckt sich die freie Endstruktur bei manchen Ausführungsbeispielen parallel zu einer axialen Richtung. Ein Bauraum könnte so ggf. optimal ausgenutzt werden und beispielsweise ein Schleifen oder Streifen an anderen Bauteilen vermieden werden. Ein Bauteil, das sich parallel zu einer axialen Richtung erstreckt, kann beispielsweise um einen Wertebereich mit einem Anfangs- und/oder Endwert von 0°, 1°, 4°, 6°, 8° und/oder 10° in beide Richtungen von einer axialen Richtung abweichen. Diese Abweichungen können sich eventuell aus fertigungstechnisch bedingten Toleranzen bei der Herstellung des Bauteils, der Montage und/oder einem Betrieb ergeben.

Ausführungsbeispiele betreffen eine Schwingungsdämpfungsanordnung mit einer radial außen liegenden Dämpferelementenanordnung, die an einem scheibenartigen Bauteil angeordnet ist. Die Schwingungsdämpfungsanordnung weist auch ein Stützbauteil auf, das als radial äußerer Anschlag für zumindest eine Dämpferelementeneinheit der Dämpferelementenanordnung dient. Ein Innendurchmesser des Stützbauteils ist dabei an einem Ende des Stützbauteils kleiner, als ein Außendurchmesser des scheibenartigen Bauteils. Bei manchen Ausführungsbeispielen kann so ermöglicht werden, dass die Dämpferelementeneinheit besser zwischen dem Stützbauteil und dem scheibenartigen Bauteil gehalten werden kann. Es kann sich bei dem freien Ende um die freie Endstruktur handeln, die sich weiter in eine axiale Richtung als die Dämpferelementeneinheit erstreckt. Bei dem Außendurchmesser des scheibenartigen Bauteils kann es sich beispielsweise um den größten Außendurchmesser des scheibenartigen Bauteils handeln. Bei dem Innendurchmesser des Stützbauteils kann es sich ggf. um einen kleinsten Innendurchmesser des Stützbauteils handeln, der ausgehend von einem Mittelpunkt der Dämpferelementeneinheit in einer axialen Richtung auf einer dem Antrieb zugewandten Seite liegt.

Ausführungsbeispiele betreffen eine Schwingungsdämpfungsanordnung mit einer radial außen liegenden Dämpferelementenanordnung, die an einem scheibenartigen Bauteil angeordnet ist. Die Schwingungsdämpfungsanordnung umfasst auch ein Stützbauteil, das als radial äußerer Anschlag für zumindest eine Dämpferelementeneinheit der Dämpferelementenanordnung dient. Das Stützbauteil und das scheibenartige Bauteil sind über eine Verbindungsstruktur verbunden, die auf einer radial vergleichbaren Höhe liegt, wie ein Mittelpunkt der Dämpferelementeneinheit. Ein Bauraum, der radial innerhalb der Dämpferelementenanordnung liegt, kann bei manchen Ausbeispielselen, weil er nicht für die Verbindungsstruktur benötigt wird, eventuell zu Aufnahme einer andere Dämpfereinheit oder deren Massen verwendet werden. Eine vergleichbare radiale Höhe kann ggf. in einem Bereich liegen, der sich, ausgehend von dem Mittelpunkt der Dämpferelementeneinheit sowohl nach radial innen, wie auch nach radial außen erstreckt. Der Bereich kann eine Ausdehnung aufweisen, die zum Beispiel in einem Wertebereich liegt, dessen Anfangs- und/oder Endwert 0%, 1%, 4%, 5%, 8% und/oder 10% eines Durchmessers der Dämpferelementeneinheit betragen.

Ausführungsbeispiele betreffen eine Schwingungsdämpfungsanordnung mit einem Deckscheibenelement, das zumindest einer Dämpferelementeneinheit einer radial innen liegenden Dämpferelementenanordnung zugeordnet ist. Das Deckscheibenelement weist einen Dämpferelementeneinheitansteuersteg mit einem freien Ende auf. Bei manchen Ausführungsbeispielen kann so ermöglicht werden, dass in dem Deckscheibenelement geringere Spannungen auftreten, weil diese durch eine bewusst zugelassene Verformung des Dämpferelementeneinheitenansteuerstegs abgebaut werden können. Mit anderen Worten ist der Dämpferelementeneinheitansteuersteg nicht wie bei konventionellen Deckscheibenelementen mit einem radial außen liegendem Bereich des Deckscheibenelements verbunden. Bei dem Dämpferelementeneinheitenansteuersteg handelt es sich um eine Bauteil, das in Umfangsrichtung in Wirkverbindung oder Anlage mit der zumindest einen Dämpferelementeneinheit steht oder mit dieser in Wirkverbindung gebracht werden kann.

Ausführungsbeispiele betreffen eine Schwingungsdämpfungsanordnung mit einer zur Drehmomentübertragung mit einem Antriebsorgan gekoppelten oder koppelbaren Primärseite und einer gegen die Rückstellwirkung einer radial außen liegenden Dämpferelementenanordnung um eine Drehachse bezüglich der radial außen liegenden Primärseite drehbaren, radial außen liegenden Sekundärseite. Die Primärseite und die Sekundärseite sind ausgebildet, um in manchen Betriebszuständen in axialer Richtung aneinander anzuliegen, um zu verhindern oder zumindest die Gefahr zu reduzieren, dass die Sekundärseite eine Gehäuseschale berührt. So kann bei manchen Ausführungsbeispielen ein Verschleiß vermieden werden, der ansonsten ggf. bei ungünstigen Betriebszuständen zwischen der Sekundärseite und der Gehäuseschale auftreten könnte. Stattdessen wird bei manchen Ausführungsbeispielen ein Kontakt in axialer Richtung zwischen der Primärseite bzw. einer als Primärseite ausgebildeten Lamelle und der Sekundärseite zugelassen, die im Vergleich zu der zweiten Sekundärseite und der Gehäuseschale bei geöffneter Kupplung eine geringere relative Bewegung zueinander ausführen.

Ausführungsbeispiele betreffen eine hydrodynamische Kupplungsvorrichtung bei der eine Schwingungsdämpfungsanordnung mit einem Turbinenrad verbunden ist. Die Verbindungsstelle zwischen diesen beiden Bauteilen befindet sich dabei auf einer radial vergleichbaren Höhe zu einem Mittelpunkt einer Dämpferelementeneinheit einer radial innen liegenden Dämpferelementenanordnung. Die radial vergleichbare Höhe kann zum Beispiel ein Bereich sein, der sich, in jede radiale Richtung um den Mittelpunkt der Dämpferelementeneinheit erstreckt. Der Bereich kann eine Ausdehnung aufweisen, die zum Beispiel in einem Wertebereich liegt, dessen Anfangs- und/oder Endwert 0%, 1%, 4%, 5%, 8% und/oder 10% eines Durchmessers der Dämpferelementeneinheit betragen. So könnte ggf. eine axiale Steifigkeit des Turbinenrads erhöht werden. Bei manchen Ausführungsbeispielen ist an der Verbindungsstelle eine Verbindungsstruktur vorgesehen. Die Verbindungstruktur kann durch Öffnungen in dem Turbinenrad und der Schwingungsdämpfungsanordnung geführt sein, beispielsweise ein Niet, ein Nietbolzen, eine Schraubverbindung oder dergleichen Ferner kann es sich bei der Verbindungsstruktur auch um eine stoffschlüssige Verbindung, zum Beispiel eine Schweißverbindung, Crimpverbindung, Lötverbindung, Klebeverbindung oder dergleichen handeln.

Ergänzend oder alternativ weist ein Leitrad bei manchen Ausführungsbeispielen eine Ausnehmung auf, die ausgebildet ist, um die Verbindungsstruktur zumindest teilweise aufzunehmen. So könnte unter Umständen ausreichend Platz für die Verbindungsstruktur geschaffen werden und/oder axialer Bauraum reduziert werden. Beispielsweise kann die Verbindungsstruktur aus einer axialen Richtung in die Ausnehmung ragen. Ergänzend oder alternativ, kann das Leitrad auf einer radialen Höhe, in der sich die Verbindungsstruktur befindet, freigestellt sein.

Ausführungsbeispiele betreffen eine hydrodynamische Kopplungsvorrichtung mit einer Überbrückungskupplung. Ein Kupplungskolben der Überbrückungskupplung weist dabei eine radiale Ausdehnung auf, die größer ist als ein Radius, auf dem sich eine radial außen liegende Kante einer Auslenkungsmasse bei manchen Betriebszuständen befindet. Bei manchen Ausführungsbeispielen kann so eine Betätigung der ersten Primärseite, die als Lamelle ausgebildet sein kann, um die Primärseite mit dem Gehäuse in Anlage zu bringen, verbessert werden. Mit anderen Worten kann der Kupplungskolben so ausgebildet sein, dass er sich bis zu einer vergleichbaren radialen Höhe erstreckt, in der die Lamelle einen von der radialen Richtung abweichenden Bereich aufweist, der ausgebildet ist, um in die Dämpferelementenanordnung einzugreifen bzw. mit dieser in Anlage zu stehen. Beispielsweise kann der Kupplungskolben ausgebildet sein, sodass seine radiale Ausdehnung größer ist als ein Radius auf dem eine radial außen liegende Kante der Auslenkungsmassen in allen Betriebszuständen liegt.

Die vorliegende Erfindung betrifft ferner eine hydrodynamische Kopplungsvorrichtung, vorzugsweise Drehmomentwandler, umfassend ein mit Fluid gefülltes oder füllbares Gehäuse, ein Pumpenrad und ein Turbinenrad sowie ein mit einer Getriebeanordnung gekoppeltes oder koppelbares Abtriebsorgan, wobei im Drehmomentübertragungsweg zwischen dem Gehäuse und dem Abtriebsorgan eine erfindungsgemäß aufgebaute Schwingungsdämpfungsanordnung ist.

Bei einer derartigen hydrodynamischen Kopplungsvorrichtung kann die erste Primärseite vermittels einer Überbrückungskupplungsanordnung mit dem Gehäuse koppelbar sein. Alternativ oder zusätzlich kann das Turbinenrad mit dem Abtriebsorgan drehfest sein, also mit diesem zur gemeinsamen Rotation um die Drehachse ohne die Möglichkeit einer Relativdrehbewegung ausgebildet sein.

Die Erfindung betrifft ferner ein Antriebssystem für ein Fahrzeug, umfassend ein Antriebsaggregat, eine Getriebeanordnung und im Drehmomentübertragungsweg zwischen dem Antriebsaggregat und der Getriebeanordnung eine erfindungsgemäße Schwingungsdämpfungsanordnung bzw. hydrodynamische Kopplungsanordnung.

Die Erfindung wird nachfolgend mit Bezug auf die beiliegenden Figuren detailliert beschrieben. Es zeigt:
Fig. 1 eine Längsschnittansicht eines hydrodynamischen Drehmomentwandlers mit einer Schwingungsdämpfungsanordnung im Drehmomentübertragungsweg zwischen einer Überbrückungskupplung und einer Abtriebsnabe;
Fig. 2 eine perspektivische Ansicht einer Auslenkungsmassenpendelanordnung mit aus einer Neutral-Relativlage bezüglich eines Auslenkungsmassenträgers ausgelenkten Auslenkungsmassen;
Fig. 3 eine Axialansicht der Auslenkungsmassenpendelanordnung der Fig. 2;
Fig. 4 eine Teil-Längsschnittansicht eines hydrodynamischen Drehmomentwandlers mit einer alternativ ausgebildeten Schwingungsdämpfungsanordnung;
Fig. 5 in ihrer Darstellung a) eine Axialansicht einer Torsionsschwingungsdämpferanordnung für die Schwingungsdämpfungsanordnung des hydrodynamischen Drehmomentwandlers der Fig. 4; und in ihrer Darstellung b) eine Axialansicht einer Auslenkungsmassenpendelanordnung für die Schwingungsdämpfungsanordnung des hydrodynamischen Drehmomentwandlers der Fig. 4;
Fig. 6 in ihrer Darstellung a) eine Axialansicht einer Torsionsschwingungsdämpferanordnung für die Schwingungsdämpfungsanordnung des hydrodynamischen Drehmomentwandlers der Fig. 4; und in ihrer Darstellung b) eine Axialansicht einer Auslenkungsmassenpendelanordnung für die Schwingungsdämpfungsanordnung des hydrodynamischen Drehmomentwandlers der Fig. 4;
Fig. 7 in ihrer Darstellung a) eine Axialansicht einer Torsionsschwingungsdämpferanordnung für die Schwingungsdämpfungsanordnung des hydrodynamischen Drehmomentwandlers der Fig. 4; und in ihrer Darstellung b) eine Axialansicht einer Auslenkungsmassenpendelanordnung für die Schwingungsdämpfungsanordnung des hydrodynamischen Drehmomentwandlers der Fig. 4;
Fig. 8 in ihrer Darstellung a) eine Axialansicht einer Torsionsschwingungsdämpferanordnung für die Schwingungsdämpfungsanordnung des hydrodynamischen Drehmomentwandlers der Fig. 4; und in ihrer Darstellung b) eine Axialansicht einer Auslenkungsmassenpendelanordnung für die Schwingungsdämpfungsanordnung des hydrodynamischen Drehmomentwandlers der Fig. 4;
Fig. 9 eine schematische Darstellung einer Teil-Längsschnittansicht eines hydrodynamischen Drehmomentwandlers mit einer Schwingungsdämpfungsanordnung gemäß einem Ausführungsbeispiel;
Fig. 10 in ihrer schematischen Darstellung a) einen TeilLängsschnitt eines Deckscheibenelements für einen hydrodynamischen Drehmomentwandler mit einer Schwingungsdämpfungsanordnung gemäß einem Ausführungsbeispiel; und in ihrer schematischen Darstellung b) eine Seitenansicht des Abdeckblechs der Darstellung a).

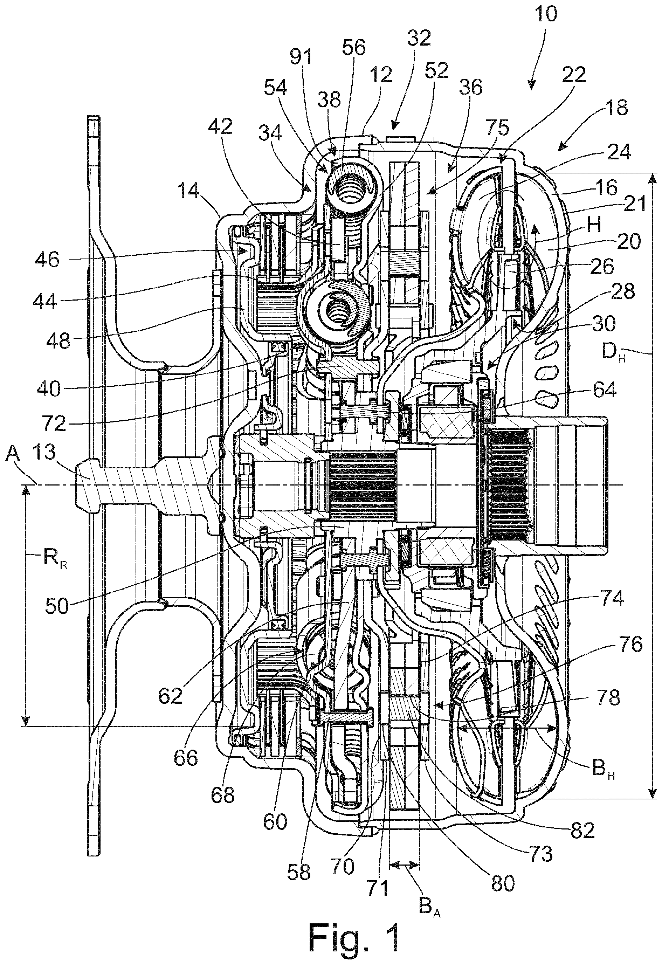

In Fig. 1 ist eine im Längsschnitt dargestellte hydrodynamische Kopplungsvorrichtung, hier ausgebildet als hydrodynamischer Drehmomentwandler, allgemein mit 10 bezeichnet. Der Drehmomentwandler 10 umfasst ein Gehäuse 12 mit einer durch eine als Antriebsorgan wirksame Antriebswelle 13 zur Drehung um eine Drehachse A antreibbaren antriebsseitigen Gehäuseschale 14 und einer abtriebsseitigen Gehäuseschale 16. An dieser ist ein allgemein mit 18 bezeichnetes Pumpenrad ausgebildet. Um die Drehachse A aufeinander in Umfangsrichtung folgend sind an der Innenseite der Gehäuseschale 16 Pumpenradschaufeln 20 vorgesehen. Um die Pumpenradschaufeln 20 oder das Pumpenrad 18 mit der Gehäuseschale 16 zu verbinden, weist das Pumpenrad 18 an einigen oder allen seinen Pumpenradschaufeln 20 eine oder mehrere nach außen, aus dem Pumpenrad 18 heraus ragende Laschen 21 auf. Die Laschen 21 werden durch nicht dargestellte Ausnehmungen in der Gehäuseschale 16 in einem Bereich außerhalb des Gehäuses 12 geführt und umgebogen. Um die Gehäuseschale 16 in dem Bereich der Ausnehmungen wieder abzudichten, werden die Laschen 21 in vielen Fällen mit der Gehäuseschale 16 verschweißt.

Dem Pumpenrad 18 axial gegenüberliegend ist im Inneren des Gehäuses 12 ein Turbinenrad 22 vorgesehen. Dieses umfasst den Pumpenradschaufeln 20 axial gegenüberliegende, in Umfangsrichtung aufeinander folgende Turbinenradschaufeln 24. Axial zwischen den radial inneren Bereichen der Pumpenradschaufeln 20 und der Turbinenradschaufeln 24 liegen Leitradschaufeln 26 eines allgemein mit 28 bezeichneten Leitrads. Dieses ist über eine Freilaufanordnung 30 auf einer nicht dargestellten Stützhohlwelle in einer Drehrichtung um die Drehachse A drehbar getragen. Durch das Pumpenrad 18, das Turbinenrad 22 und das Leitrad 28 wird mit dem im Gehäuse 12 vorhandenen Fluid, im Allgemeinen Öl, ein hydrodynamischer Kreislauf H entwickelt, der zur Drehmomentenübertragung bzw. Erhöhung genutzt werden kann.

Im Inneren des Gehäuses 12 ist ferner eine allgemein mit 32 bezeichnete Schwingungsdämpfungsanordnung vorgesehen. Diese umfasst im Wesentlichen axial nebeneinander liegend eine Torsionsdämpferanordnung 34, also im Wesentlichen einen Festfrequenzdämpfer, und eine Auslenkungsmassenpendelanordnung 36, also im Wesentlichen einen drehzahladaptiven Tilger.

Die Torsionsdämpferanordnung 34 umfasst radial gestaffelt zueinander zwei Torsionsschwingungsdämpfer 38, 40. Der radial weiter außen positionierte erster Torsionsschwingungsdämpfer 38 umfasst eine beispielsweise als Zentralscheibenelement ausgebildete erste Primärseite 42, die beispielsweise mit einem Innenlamellenträger 44 einer Überbrückungskupplung 46 verbunden sein kann. Die am Innenlamellenträger 44 getragenen abtriebsseitigen Innenlamellen können durch einen Kupplungskolben 48 mit am Gehäuse 12 bzw. der antriebsseitigen Gehäuseschale 14 drehfest gehaltenen antriebsseitigen Außenlamellen in Reibeingriff gebracht werden und damit die Überbrückungskupplung 46 in einen Einrückzustand gebracht werden, in welchem unter Überbrückung des hydrodynamischen Kreislaufs H ein Drehmoment direkt, also mechanisch, zwischen dem Gehäuse 12 und einer als Abtriebsorgan wirksamen Abtriebsnabe 50 übertragen werden kann.

Eine erste Sekundärseite 52 des radial weiter außen positionierten ersten Torsionsschwingungsdämpfers 38 umfasst zwei beidseits der ersten Primärseite 42 positionierte Deckscheibenelemente. Zumindest eines davon bildet in einem radial äußeren Bereich Abstützbereiche für eine erste Dämpferelementenanordnung 54. Diese erste Dämpferelementenanordnung 54 umfasst eine Mehrzahl von in Umfangsrichtung aufeinander folgenden und bezüglich der ersten Primärseite 42 einerseits und der ersten Sekundärseite 52 andererseits abgestützten bzw. abstützbaren ersten Dämpferelementeneinheiten 56. Jede dieser ersten Dämpferelementeneinheiten 56 kann ein oder mehrere Dämpferelemente, also beispielsweise Schraubendruckfedern, umfassen.

In ihrem radial inneren Bereich bilden die beiden miteinander beispielsweise durch Nietbolzen 58 fest miteinander verbundenen Deckscheibenelemente eine zweite Primärseite 60 des weiter radial innen positionierten zweiten Torsionsschwingungsdämpfers 40. Eine zweite Sekundärseite 62 des zweiten Torsionsschwingungsdämpfers 40 ist beispielsweise nach Art eines Zentralscheibenelements ausgebildet und ist in ihrem radial inneren Bereich beispielsweise durch Nietbolzen 64 mit der Abtriebsnabe 50 fest verbunden. Zusammen mit der zweiten Sekundärseite 62 kann auch das Turbinenrad 22 durch die Nietbolzen 64 oder ggf. auch separat mit der Abtriebsnabe 50 verbunden sein. Eine zweite Dämpferelementenanordnung 66 des zweiten Torsionsschwingungsdämpfers 40 umfasst eine Mehrzahl von in Umfangsrichtung aufeinander folgenden zweiten Dämpferelementeneinheiten 68. Auch diese können jeweils ein oder mehrere ineinander geschachtelte oder ggf. in Umfangsrichtung aufeinander folgende Dämpferelemente, beispielsweise Schraubendruckfedern, umfassen. Die zweiten Dämpferelementeneinheiten 68 stützen sich in Umfangsrichtung an jeweiligen Abstützbereichen der zweiten Primärseite 60 und der zweiten Sekundärseite 62 ab.

Bei den beiden Torsionsschwingungsdämpfern 38, 40 können sich die jeweiligen Primärseiten 42, 60 bezüglich der jeweiligen Sekundärseiten 52, 62 unter Erzeugung einer Rückstellwirkung der jeweiligen Dämpferelementenanordnungen 54, 66 um die Drehachse A ausgehend von einer im drehmomentenfreien Zustand vorliegenden Neutral-Relativdrehlage bezüglich einander drehen. Dabei wird das von einem Antriebsaggregat in das Gehäuse 12 eingeleitete Drehmoment über die Überbrückungskupplung 46, die erste Primärseite 42, die erste Dämpferelementenanordnung 54, die erste Sekundärseite 52, die zweite Primärseite 60, die zweite Dämpferelementenanordnung 66, die zweite Sekundärseite 62 auf die Abtriebsnabe 50 und beispielsweise auf eine Getriebeeingangswelle übertragen.

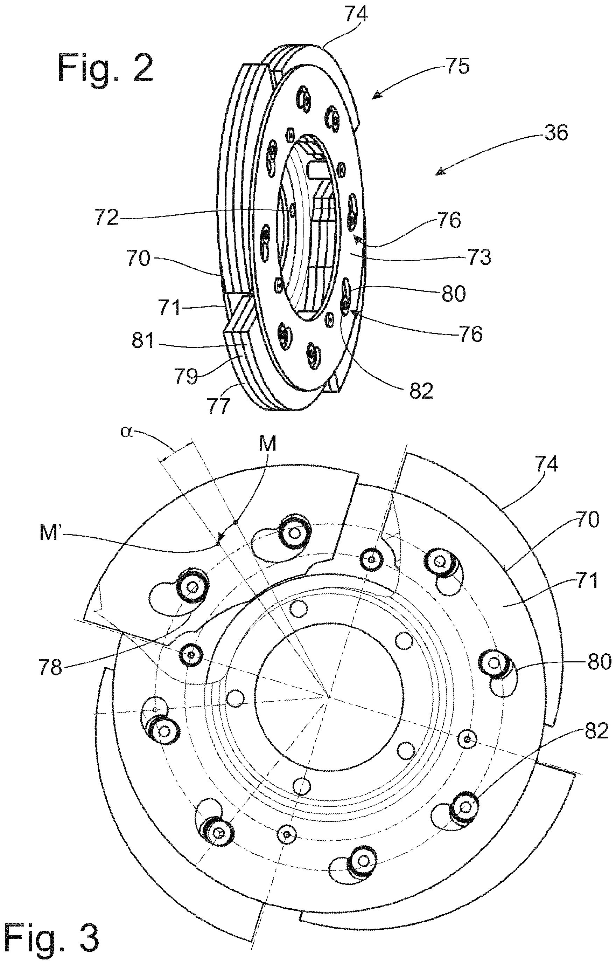

Die in Fig. 2 alleine dargestellte Auslenkungsmassenpendelanordnung 36 umfasst einen beispielsweise ringscheibenartig ausgebildeten Auslenkungsmassenträger 70. Dieser ist beispielsweise in seinem radial inneren Bereich durch Nietbolzen 72 an die beiden Deckscheibenelemente im Bereich radial innerhalb der zweiten Dämpferelementenanordnung 66 fest angebunden, so dass die beiden die erste Sekundärseite 52 und die zweite Primärseite 60 bereitstellenden Deckscheibenelemente zusammen mit der Auslenkungsmassenpendelanordnung 36 im Wesentlichen eine Zwischenmassenanordnung der beiden Torsionsschwingungsdämpfer 38, 40 bereitstellen.

Am Auslenkungsmassenträger 70 sind in Umfangsrichtung aufeinander folgend mehrere Auslenkungsmassen 74 einer Auslenkungsmassenanordnung 75 getragen. Jede dieser Auslenkungsmassen 74 ist am Auslenkungsmassenträger 70 beispielsweise im Bereich von zwei in Umfangsrichtung nebeneinander liegenden Kopplungsbereichen 76 auslenkbar getragen. Jeder dieser Kopplungsbereiche 76 umfasst in der Auslenkungsmasse 74 eine gekrümmte Führungsbahn 78 mit radial innen liegendem Scheitelbereich und im Auslenkungsmassenträger 70 eine gekrümmte Führungsbahn 80 mit radial außen liegendem Scheitelbereich. Ein bolzenartiges Kopplungselement 82 ist so positioniert, dass es beispielsweise unter Abrollbewegung entlang der Führungsbahn 78 in der Auslenkungsmasse 74 und der Führungsbahn 80 im Auslenkungsmassenträger 70 bewegt werden kann. Es sei hier darauf hingewiesen, dass die Führungsbahn 80 im Auslenkungsmassenträger 70 mehrere Führungsbahnbereiche an die Auslenkungsmassen 74 axial zwischen sich einschließenden scheibenartigen Bauteilen 71, 73 des Auslenkungsmassenträgers 70 umfassen kann und dass die Führungsbahn 78 an einer jeweiligen Auslenkungsmasse 74 mehrere Führungsbahnbereiche jeweils an axial nebeneinander positionierten und eine jeweilige Auslenkungsmasse 74 bereitstellenden scheibenartigen Auslenkungsmassenteilen 77, 79, 81 umfassen kann.

Durch Fliehkrafteinwirkung werden die Auslenkungsmassen 74 nach radial außen beaufschlagt, so dass in einer Neutral-Relativlage der Auslenkungsmassen 74 bezüglich des Auslenkungsmassenträgers 70 die Führungselemente 82 jeweils in den Scheitelbereichen der einander zugeordneten gekrümmten Führungsbahnen 78, 80 positioniert sind und die Auslenkungsmassen 74 ihre am weitesten radial außen positionierte Lage einnehmen. Bei Auftreten von Drehungleichförmigkeiten bzw. Drehschwingungen werden die Auslenkungsmassen 74 in Umfangsrichtung bezüglich des Auslenkungsmassenträgers 70 beschleunigt. Dabei bewegen sich die Führungselemente 82 aus den Scheitelbereichen der Führungsbahnen 78, 80 heraus und zwingen dadurch die Auslenkungsmassen 74 im Fliehpotential nach radial innen, so dass sie eine Schwingungsbewegung im Fliehpotential ausführen. Durch Auslegung der Massen der Auslenkungsmassen 74 einerseits und der Krümmung bzw. Länge der Führungsbahnen 78, 80 andererseits kann auf diese Art und Weise eine Abstimmung der Eigenschwingungsfrequenz der Auslenkungsmassen 74 auf eine anregende Ordnung erzielt werden.

Zusammenfassend kann also allgemein eine derartige Auslenkungsmassenpendelanordnung 36 so beschrieben werden, dass sie einen Auslenkungsmassenträger 70 umfasst, an welchem wenigstens eine Auslenkungsmasse 74 in wenigstens einem Kopplungsbereich 76 derart getragen ist, dass sie durch Fliehkrafteinwirkung nach radial außen belastet ist und bei Auftreten von Drehungleichförmigkeiten im Fliehpotential nach radial innen gezwungen wird. Der wenigstens eine Kopplungsbereich kann eine gekrümmte Führungsbahn 78 mit radial innen liegendem Scheitelbereich in der wenigstens einen Auslenkungsmasse 74 oder/und eine gekrümmte Führungsbahn 80 mit radial außen liegendem Scheitelbereich am Auslenkungsmassenträger 70 sowie ein entlang der Führungsbahn/Führungsbahnen 78, 80 bewegbares Kopplungselement 82 umfassen.

Es sei darauf hingewiesen, dass grundsätzlich auch andere Ausgestaltungsvarianten von Auslenkungsmassenpendelanordnungen bei einer Schwingungsdämpfungsanordnung vorgesehen sein können. Beispielsweise kann eine derartige Auslenkungsmassenpendelanordnung wenigstens eine an einem im Wesentlichen radial sich erstreckenden flexiblen bzw. in Umfangsrichtung auslenkbaren, beispielsweise als Drahtelement oder dergleichen ausgebildeten Trägerelement gehaltene Auslenkungsmasse umfassen, die unter Verformung bzw. Auslenkung des Trägerelements in Umfangsrichtung bezüglich eines Auslenkungsmassenträgers bewegbar ist. Fliehkraftabhängig kann die Radiallage eines Abstützpunkts des Trägerelements bezüglich des Auslenkungsmassenträgers variiert werden, so dass mit zunehmender Drehzahl die freie und somit auslenkbare Länge des Trägerelements variiert bzw. abnimmt und somit die Eigenschwingungsfrequenz einer derartigen Auslenkungsmassenpendelanordnung zunimmt.

Nachfolgend werden verschiedene Auslegungsparameter angegeben, die bei einer derartigen beispielsweise in einen hydrodynamischen Drehmomentwandler 10 integrierten Schwingungsdämpfungsanordnung 32 vorgesehen sein können, um deren Schwingungsdämpfungsverhalten zu optimieren. Es sei hier darauf hingewiesen, dass die nachfolgend angegebenen Parameter jeweils einzeln, grundsätzlich aber auch in beliebiger Kombination miteinander vorgesehen sein können.

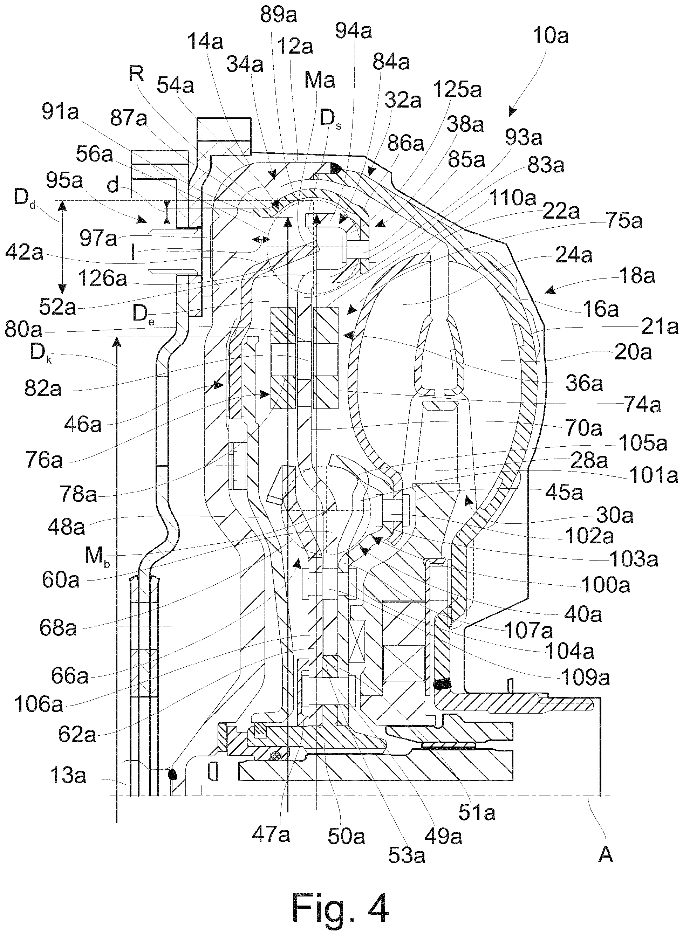

Ein erster dieser Aspekte betrifft das Verhältnis der Anzahl an Dämpferelementeneinheiten 56 der ersten Dämpferelementenanordnung 54 zur Anzahl an Auslenkungsmassen 74. Dieses Verhältnis sollte beispielsweise in einem Bereich von 0,6 bis 1,7, vorzugsweise 0,8 bis 1,3, liegen. Dies bedeutet, dass die Abweichung dieser Anzahlen voneinander nicht zu groß sein sollte. Beispielsweise können bei Vorsehen von vier Dämpferelementeneinheiten 56 fünf Auslenkungsmassen 74, oder bei Vorsehen von fünf Dämpferelementeneinheiten 56 vier Auslenkungsmassen 74 vorgesehen sein. Auch eine jeweils gleiche Anzahl, beispielsweise jeweils vier bzw. jeweils fünf, kann bei manchen Ausführungsbeispielen geeignet sein. Diese Varianten werden, wie nachfolgend auch mit Bezug auf die Fig. 4 und folgende noch beschrieben, dann besonders bevorzugt, wenn der Auslenkungsmassenträger in die Torsionsdämpferanordnung 34 integriert ist. Bei einer baulichen Ausgestaltung, wie sie in Fig. 1 gezeigt ist, also bei grundsätzlich separater Ausgestaltung der Auslenkungsmassenpendelanordnung 36 und Verbindung des Auslenkungsmassenträgers 70 derselben mit der Torsionsdämpferanordnung besteht eine größere Freiheit hinsichtlich des angegebenen Verhältnisses, ohne dass das Problem einer Schwächung von Komponenten der Torsionsdämpferanordnung entsteht.

Es sei darauf hingewiesen, dass ein entsprechendes Verhältnis auch bei der Anzahl der Dämpferelementeneinheiten 68 der zweiten Dämpferelementenanordnung 66 bezüglich der Anzahl an Auslenkungsmassen 74 realisiert sein kann.

Gemäß einem zweiten Aspekt kann ein Verhältnis der Steifigkeit der ersten Dämpferelementenanordnung zur Steifigkeit der zweiten Dämpferelementenanordnung kleiner als 1,2, vorzugsweise kleiner als 1 sein. Die Steifigkeit kann hier beispielsweise als Federkonstante betrachtet werden, also als das pro Drehwinkeleinheit zur Erzeugung einer Relativdrehbewegung zwischen einer jeweiligen Primärseite und Sekundärseite aufzubringende Drehmoment. Hier wird bei einer jeweiligen Dämpferelementenanordnung 54 bzw. 66 die Gesamtsteifigkeit, also die Steifigkeit aller Dämpferelementeneinheiten 56 bzw. 68 derselben berücksichtigt. Beispielsweise sind dabei die Dämpferelementenanordnungen 54 bzw. 66 bzw. deren Dämpferelementeneinheiten 56, 68 so ausgebildet, dass sie über den gesamten möglichen Relativdrehwinkel zwischen einer jeweiligen Primärseite und Sekundärseite eine im Wesentlichen konstante Steifigkeit bereitstellen. Alternativ könnten beim ersten Torsionsschwingungsdämpfer 38 oder/und beim zweiten Torsionsschwingungsdämpfer 40 die Dämpferelementeneinheiten 56 bzw. 68 mit von der Relativdrehlage der Primärseite bezüglich der Sekundärseite abhängiger, insbesondere mit zunehmendem Relativdrehwinkel zunehmender Steifigkeit ausgebildet sein. In diesem Falle kann dann zum Bilden des vorangehenden Verhältnisses beispielsweise die gemittelte Steifigkeit herangezogen werden, wobei bei stufenartiger Steifigkeitsänderung, also mit Knickbereichen ausgebildeter Kennlinie, die mittlere Steifigkeit berechnet werden kann durch Bilden der Summe der einzelnen Steifigkeiten und Teilen dieser Summe durch die Anzahl der einzelnen Steifigkeitsbereiche, also durch Bilden des arithmetischen Mittels.

Um die in Kraftfahrzeugen allgemein zu übertragenden Drehmomente im elastischen Bereich der Dämpferelementenanordnungen 54, 66 übertragen zu können, kann die Steifigkeit der ersten Dämpferelementenanordnung 54 im Bereich von 10 bis 25 Nm/° liegen. Die Steifigkeit der zweiten Dämpferelementenanordnung 66 kann im Bereich von 10 bis 55 Nm/° liegen. Grundsätzlich sollte bei der Auslegung vorgesehen sein, dass die Steifigkeit des ersten Torsionsschwingungsdämpfers 38 kleiner ist, als die Steifigkeit des weiter radial innen und beispielsweise im selben Axialbereich wie der erste Torsionsschwingungsdämpfer 38 liegenden zweiten Torsionsschwingungsdämpfers 40. Somit wird im weiter radial außen liegenden Raum das größere Volumen genutzt, um dort auch bei geringerer Steifigkeit einen entsprechend großen Relativdrehwinkelbereich zwischen der ersten Primärseite 42 und der ersten Sekundärseite 52 bereitstellen zu können.

Gemäß einem weiteren Aspekt kann vorgesehen sein, dass das Verhältnis eines Maximaldrehmoments der ersten Dämpferelementenanordnung 54 zu einem Maximaldrehmoment der zweiten Dämpferelementenanordnung 66 im Bereich von 0,8 bis 1,2, vorzugsweise 0,9 bis 1,1, am meisten bevorzugt bei etwa 1 liegt. Das Maximaldrehmoment einer jeweiligen Dämpferelementenanordnung 54, 66 kann als dasjenige Drehmoment betrachtet werden, welches in demjenigen Bereich maximal übertragbar ist, in welchem die jeweilige Primärseite und Sekundärseite unter Kompression der zugeordneten Dämpferelementenanordnung bezüglich einander verdrehbar sind, also die Dämpferelementenanordnung in ihrem elastischen Bereich wirksam ist. Das Maximaldrehmoment einer jeweiligen Dämpferelementenanordnung kann begrenzt sein durch einen Drehanschlag, welcher eine Weiterdrehung der jeweiligen Primärseite bezüglich der zugeordneten Sekundärseite und damit eine Überlastung der Dämpferelementenanordnung verhindert. Liegt das Verhältnis der Maximaldrehmomente im angegebenen Bereich, bedeutet dies, dass diese Maximaldrehmomente näherungsweise gleich groß sind, so dass gewährleistet ist, dass auch vergleichsweise große bzw. die größten zu übertragenden Drehmomenten in beiden Torsionsschwingungsdämpfern 38, 40 im Bereich von deren elastischer Wirksamkeit übertragen werden können.

Weiter kann vorgesehen sein, dass das Verhältnis eines Maximaldrehmoments der im Allgemeinen mit geringerer Steifigkeit ausgebildeten ersten Dämpferelementenanordnung 54 zu einem von einem Antriebsaggregat maximal abgebbaren Maximalantriebsdrehmoment im Bereich von 1,1 bis 1,4, vorzugsweise 1,15 bis 1,35, am meisten bevorzugt 1,2 bis 1,22, liegt. Somit wird gleichermaßen gewährleistet, dass im gesamten Drehmomentenspektrum, welches von einem Antriebsaggregat, beispielsweise Brennkraftmaschine, abgegeben werden kann, insbesondere auch die im Allgemeinen weicher ausgebildete erste Dämpferelementenanordnung 54 elastisch wirksam sein kann.

Gemäß einem weiteren Aspekt wird zur Optimierung der Schwingungsdämpfungs- bzw. Tilgungscharakteristik vorgeschlagen, dass ein Verhältnis eines maximalen Relativdrehwinkels zwischen der ersten Primärseite und der ersten Sekundärseite, ausgehend von einer Neutral-Relativdrehlage der ersten Primärseite 42 bezüglich der ersten Sekundärseite 52, in wenigstens einer Relativdrehrichtung zu einem maximalen Auslenkungswinkel α einer Auslenkungsmasse 74 aus deren Neutral-Relativdrehlage bezüglich des Auslenkungsmassenträgers 70 im Bereich von 1,3 bis 10, vorzugsweise im Bereich von 1,5 bis 7,5, liegt. Der Auslenkungswinkel α einer bzw. aller Auslenkungsmassen 74 ist in Fig. 3 veranschaulicht. Dies ist der Winkel, welcher zwischen zwei von der Drehachse A ausgehenden und den Massenschwerpunkt M einer jeweiligen Auslenkungsmasse 74 in der Neutral-Relativlage bezüglich des Auslenkungsmassenträgers bzw. bei Massenschwerpunkt M' aller jeweiligen Auslenkungsmassen 74 bei aus der Neutral-Relativlage maximal ausgelenkter Auslenkungsmasse durchquerenden Linien eingeschlossen ist. Man erkennt in Fig. 3, dass bei der Auslenkung einer jeweiligen Auslenkungsmasse 74 aufgrund der gekrümmten Ausgestaltung der Führungsbahnen 78 bzw. 80 der Massenschwerpunkt M nach radial innen verlagert wird, wodurch potentielle Energie aufgenommen wird und die Auslenkungsmassen 74 unter Fliehkrafteinwirkung eine Oszillation im Bereich von +/- α um die Neutral-Relativlage ausführen können. Die maximale Auslenkung kann beispielsweise dadurch begrenzt sein, dass die Kopplungselemente 82 die Endbereiche der Führungsbahnen 78 oder/und 80 erreichen und somit eine weitergehende Bewegung nicht mehr möglich ist. Es hat sich gezeigt, dass, selbstverständlich abhängig von den zu eliminierenden Schwingungsordnungen bzw. den diese anregenden Ereignissen der Winkel α beispielsweise im Bereich zwischen 5 und 15° liegt, während der maximale Relativdrehwinkel zwischen der ersten Primärseite und der ersten Sekundärseite, selbstverständlich auch wieder abhängig von der jeweiligen Auslegung eines Antriebsstrangs, im Bereich zwischen 20° und 50°, vorzugsweise 23° und 45°, liegen kann. Eine Ausgestaltung der Auslenkungsmassenpendelanordnung 36 derart, dass der maximale Auslenkungswinkel α größer als 15° ist, kann zu gegenseitigen Störungen der Auslenkungsmassen 74 bzw. einer Beeinträchtigung der Tilgungscharakteristik führen, so dass der Winkel α nicht größer als 15° sein sollte.

Da hier insbesondere der Zugzustand, also derjenige Zustand, in welchem ein Antriebsaggregat ein Drehmoment erzeugt und dieses über die Schwingungsdämpfungsanordnung 32 zu übertragen ist, ein besonders kritischer Zustand ist, sollte diese Bedingung zumindest für diesen Zugzustand, also einen Zustand, in welchem ein Drehmomentenfluss von der ersten Primärseite 42 zur zweiten Sekundärseite 62 vorliegt, realisiert sein. Selbstverständlich kann bei symmetrischer Ausgestaltung der Torsionsdämpferanordnung 34 diese Bedingung auch für den Schubzustand, also bei einem Zustand mit Drehmomentenfluss von der zweiten Sekundärseite 62 zur ersten Primärseite 42, realisiert sein.

Um den insbesondere in einem hydrodynamischen Drehmomentwandler 10 zur Verfügung stehenden Bauraum möglichst effizient auszunutzen, kann gemäß einem weiteren Aspekt vorgesehen sein, dass das Verhältnis eines mittleren Reibradius R_{R} der Überbrückungskupplung 46 zu einem Radialabstand R_{M} des Massenschwerpunkts M einer jeweiligen Auslenkungsmasse 74 zur Drehachse in der Neutral-Relativdrehlage bezüglich des Auslenkungsmassenträgers 70 größer als 0,8, vorzugsweise größer als 0,95, ist. Hier kann als mittlerer Reibradius R_{R} beispielsweise der mittlere Radius desjenigen Flächenbereichs der antriebsseitigen bzw. der abtriebsseitigen Reibelemente betrachtet werden, in welchem diese einander überlappend reibend wirksam sind. Auch hier kann z. B. das arithmetische Mittel zwischen maximalem und minimalem Reibradius herangezogen werden. Liegt dieses Verhältnis im angegebenen Bereich, so ist dafür gesorgt, dass die Auslenkungsmassen vergleichsweise weit radial außen positioniert sind und somit eine möglichst effiziente Ausnutzung der im Rotationsbetrieb auftretenden Fliehkräfte bzw. des Fliehpotentials erfolgt. Hier könnte beispielsweise der mittlere Reibradius im Bereich von 91 bis 93 mm liegen, während der Radialabstand des Massenschwerpunkts der Auslenkungsmassen 74 zur Drehachse A im Bereich von 93 bis 95 mm liegen kann.

Gemäß einem weiteren Aspekt kann vorgesehen sein, dass das Verhältnis eines Radialabstands R_{M} des Massenschwerpunkts M der bzw. jeder Auslenkungsmasse 74 zur Drehachse A zum Außendurchmesser D_{H} des hydrodynamischen Kreislaufs des Drehmomentwandlers 10 im Bereich von 0,3 bis 0,5 liegt. Dies bedeutet, dass der Massenschwerpunkt M näherungsweise den gleichen Radialabstand zur Drehachse A aufweist, wie die radial äußeren Bereiche der Pumpenradschaufeln 20 bzw. der Turbinenradschaufeln 24. Auch dies führt zu einer möglichst effizienten Ausnutzung des Bauraums bzw. der im Rotationsbetrieb auf die Auslenkungsmassen 74 einwirkenden Fliehkraft.

Weiter kann vorgesehen sein, dass das Verhältnis einer axialen Breite B_{H} des hydrodynamischen Kreislaufs zu der axialen Breite B_{A} der bzw. jeder Auslenkungsmasse 74 im Bereich von 2,5 bis 7,5, vorzugsweise 2,75 bis 6,9, liegt. Dies bedeutet, dass ein vergleichsweise großer axialer Bauraum für den hydrodynamischen Kreislauf H genutzt werden kann, gleichwohl jedoch auch der Tilgungseffekt einer Auslenkungsmassenpendelanordnung 36 genutzt werden kann.

Mit Bezug auf die Fig. 4 wird nachfolgend eine alternative Ausgestaltung einer hydrodynamischen Kopplungsvorrichtung, auch hier wieder in Form eines hydrodynamischen Drehmomentwandlers, bzw. einer darin enthaltenen Schwingungsdämpfungsanordnung beschrieben. Hier sind Komponenten, welche hinsichtlich Aufbau bzw. Funktion den vorangehend beschriebenen Komponenten entsprechen, mit dem gleichen Bezugszeichen unter Hinzufügung eines Anhangs "a" bezeichnet. Da der grundsätzliche Aufbau des Drehmomentwandlers 10a dem vorangehend beschriebenen entspricht, wird im Folgenden lediglich auf einige zu der Ausgestaltungsform gemäß Fig. 1 bestehende Unterschiede, insbesondere im Bereich der Schwingungsdämpfungsanordnung 32a, eingegangen. Diese Unterschiede können bei weiteren, nicht dargestellten Ausführungsbeispielen einzeln oder in unterschiedlichen Kombinationen implementiert sein.

Der Drehmomentwandler 10a ist antriebsseitig über eine flexible Anschlussplatte 95a mit einem nicht dargestellten Antriebsorgan verbunden. Über die flexible Anschlussplatte 95a kann der Drehmomentwandler 10a an Antriebskomponenten oder -organe unterschiedlicher Größe angebunden werden. Variierende Ausdehnungen unterschiedlicher Antriebskomponenten in axiale und/oder radiale Richtung können so ggf. ausgeglichen werden. Ferner kann die flexible Anschlussplatte 95a bei manchen Ausführungsbeispielen auch dazu dienen, um Taumelschwingungen, die ggf. mit dem Antriebsorgan erzeugt werden, von dem Drehmomentwandler 10a fernzuhalten. Dazu ist die flexible Anschlussplatte 95a in einem radial außen liegenden Bereich 97a mit einer antriebsseitigen Gehäuseschale 14a des Gehäuses 12a verbunden. In einem radial innen liegenden Bereich ist die flexible Anschlussplatte 95a mit der Antriebswelle 13a verbunden.

Bei dem in Fig. 4 dargestellten Aufbau umfasst die Torsionsdämpferanordnung 34a wieder die beiden radial gestaffelt und im Wesentlichen im gleichen Axialbereich liegenden Torsionsschwingungsdämpfer 38a, 40a. Ein beispielsweise scheibenartiges und die erste Primärseite 42a bereitstellendes Bauteil, das auch als Lamelle bezeichnet werden kann, bildet in seinem radial inneren Bereich auch ein Reibelement der Überbrückungskupplung 46a, welches durch den Kupplungskolben 48a gegen die Innenseite des Gehäuses 12a bzw. der antriebsseitigen Gehäuseschale 14a pressbar ist, um den Überbrückungszustand herzustellen. Die erste Sekundärseite 52a ist bereitgestellt mit einem scheibenartigen Bauteil 83a, das in seinem radial äußeren Bereich Umfangsabstützbereiche 84a für die Dämpferelementeneinheiten 56a der ersten Dämpferelementenanordnung 54a bereitstellt.

Bei manchen Ausführungsbeispielen weist die radial außen liegende Dämpferelementenanordnung, die auch als Dämpfer bezeichnet werden kann, keinen Endanschlag in Form eines Abstandsstücks, einer Blechlasche oder dergleichen aus. Stattdessen kann bei Ausführungsbeispielen, bei denen die Dämpferelementeneinheiten als Federn oder Schraubenfedern ausgebildet sind, eine Dämpferelementeneinheit- oder Federwegbegrenzung über einen sog. Windungsblock erreicht werden. Dazu können beispielsweise die Federwindungen blocken, indem sie aneinander anliegen. Um einen direkten Federanschlag zu erreichen, kann die Dämpferelementeneinheit, die als Federblock ausgebildet sein kann, abgeflachte Windungen aufweisen. Die Windungen könne dabei an einem Bereich abgeflacht sein, an dem sie mit einer benachbarten Windung in Anlage kommen können. Zumindest einzelne Windungen können also eine ebene oder plane, in eine Umfangsrichtung gerichtete Fläche aufweisen.

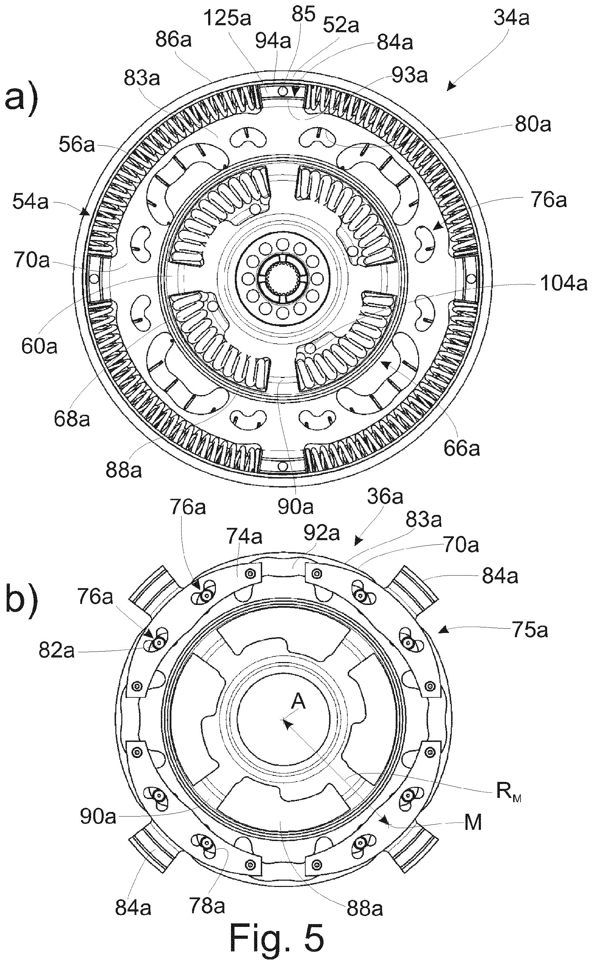

Mit diesem scheibenartigen Bauteil 83a kann ein die Dämpferelementeneinheiten 56a nach radial außen stützendes ringartiges Stützbauteil 86a mit besonderem Vorzug durch Vernietung, verbunden sein. Dazu wird eine Verbindungsstruktur 85a eingesetzt. Bei der Verbindungsstruktur 85a handelt es sich um einen Niet. Wie in der Fig. 5a) erkennbar, ist das scheibenartige Bauteil 83a über vier Verbindungstrukturen 85a mit dem Stützbauteil 86a verbunden. Jeweils eine Verbindungstruktur 85a ist dabei an einem Umfangsabstützbereich 84a für die Dämpferelementeneinheiten 56a angeordnet. Der Umfangsabstützbereich 84a weist eine C-Form auf. An einen, sich im Wesentlichen in eine axiale Richtung, hin zu dem Turbinenrand 22a erstreckenden Abschnitt 93a des Umfangsabstützbereichs 84a schließt ein, sich im Wesentlichen in die radiale Richtung erstreckender Abschnitt 125a an. Der Abschnitt 125a ist in axialer Richtung beabstandet zu einem radial weiter innen liegenden Bereich des scheibenartigen Bauteils 83a ausgebildet. Die Verbindungsstruktur 85a ist an dem Abschnitt 125a angeordnet. Als dritte Seite umfasst der C-förmige Umfangsabstützbereich 84a einen Abschnitt 94a, der sich im Wesentlichen parallel zu dem Abschnitt 93a und einer axialen Richtung erstreckt.

Bei einigen weiteren, nicht dargestellten Ausführungsbeispielen kann die Verbindungsstruktur auch als Schraub-, Klipp-, Präge-, Schweiß-, Klebeverbindung oder dergleichen ausgebildet sein. Ferner kann bei anderen Ausführungsbeispielen, die eine andere Anzahl an Umfangsabstützbereichen aufweisen, eine Anzahl von Verbindungsstrukturen vorgesehen sein, die der Anzahl der Umfangsabstützbereiche entspricht. Optional kann sich die Anzahl der Verbindungsstrukturen auch von der Anzahl der Umfangsabstützbereiche unterscheiden und ggf. größer oder kleiner sein.

Die Verbindungsstruktur 85a ist auf einer radial vergleichbaren Höhe zu einem Mittelpunkt Mₐ der Dämpferelementeneinheit 56a der radial außen liegenden Dämpferelementenanordnung 54a angeordnet. Die radial vergleichbare Höhe kann dabei beispielsweise in einem Bereich liegen, der sich jeweils in eine radialer Richtung von dem Mittelpunkt Mₐ erstreckt und eine Ausdehnung aufweist, die in einem Wertebereich liegt mit einem Anfangs- und/oder einem Endwert von 0%, 1%, 4%, 5%, 8% und/oder 10% eines Durchmessers D_{d} der Dämpferelementeneinheit 56a.

Das Stützbauteil 86a umfasst einen Anlagebereich 89a, an den sich zumindest in einem Betriebszustand zumindest eine der Dämpferelementeneinheiten 56a nach radial außen anlegt. Der Anlagebereich 89a weist bei dem Ausführungsbeispiel der Fig. 4 eine nach radial innen gerichtete Fläche mit einer Wölbung auf. Die Wölbung ist in einem Radius ausgebildet, der im Wesentlichen einem Radius der Dämpferelementeneinheit 56a entspricht. Ferner weist das Stützbauteil 86a eine freie Endstruktur 87a auf, die auch als Bund bezeichnet werden kann. Zumindest in einem Betriebszustand liegen die Dämpferelementeneinheiten 56a nicht an der freien Endstruktur an. Die freie Endstruktur 87a erstreckt sich weiter in eine axiale Richtung als die Dämpferelementeneinheit 56a und ist im Wesentlichen parallel zu einer axialen Richtung ausgerichtet. Ein Bauteil, das sich parallel zu einer axialen Richtung erstreckt, kann beispielsweise um einen Winke in beide Richtungen von einer axialen Richtung abweichen, der in einem Wertebereich mit einem Anfangs- und/oder Endwert von 0°, 1°, 4°, 6°, 8° und/oder 10° liegt. Eine Ausdehnung der freien Endstruktur 87a in eine axiale Richtung, die auch als Bundlänge I bezeichnet werden kann, kann 1 mm, oder 2 mm oder eine größere Ausdehnung betragen.

Beispielsweise kann das Stützbauteil 86a als einstückiges Blechumformteil ausgebildet sein. Zwischen der freien Endstruktur 87a und dem Anlagebereich 89a ist ein Radius R ausgebildet. Der Radius R kann in einem Wertebereich mit einem Anfangs- und/oder Endwert von 2 mm, 3 mm, 8 mm, 10 mm, 15 mm und/oder 20 mm liegen. Bei manchen Ausführungsbeispielen können Radien, die in einem Bereich von 3 mm und 8 mm liegen, besonders gut hergestellt werden.

Durch das Hinzufügen der freien Endstruktur 87a an dem Stützbauteil 86a, das auch als Halteblech bezeichnet werden kann, kann sich bei manchen Ausführungsbeispielen eine spannungshöchste Stelle beabstandet von einer Kante 91a ausbilden. Dadurch könnte unter Umständen gegenüber dem Ausführungsbeispiel der Fig. 1, bei dem die Dämpferelementeneinheit 56 die Kante 91 berühren kann, ein Verschleiß minimiert und/oder eine Lebensdauer erhöht werden. Dies kann möglich sein, weil bei manchen Betriebszuständen die höchste Spannung bei dem Ausführungsbeispiel der Fig. 1 an der Kante 91 auftritt. Da Kanten, beispielsweise Schnittkanten, auf solche Spannung anfälliger und ggf. mit Verscheiß reagieren können, kann das Verlagern der spannungshöchsten Stelle bzw. einer Anlagefläche der Dämpferelementeneinheit, weg von der Kante, in manchen Fällen zu einer Reduktion des Verschleißes oder sogar einer Erhöhung der Lebensdauer führen. Ferner kann sich bei manchen Ausführungsbeispielen ein Absolutwert der Spannung, die in dem Stützbauteil 86a auftreten kann, reduzieren. Dies könnte sich unter Umständen ebenfalls günstig auf die Lebensdauer auswirken.

Durch die Ausbildung der freien Endstruktur 87a und sich dadurch verbessernde Spannungsverläufe in dem Bauteil kann bei manchen Ausführungsbeispielen beispielsweise eine Materialstärke des Stützbauteils 86a reduziert werden. Ggf. kann das Stützbauteil 86a mit einer Dicke d, also einer Ausdehnung in eine radiale Richtung, die auch als Blechdicke bezeichnet werden kann, von 2 mm ausgeführt werden.

Ein Außendurchmesser Dₛ des scheibenartigen Bauteils 83a, das auch als Nabenscheibe bezeichnet werden kann, ist dabei größer als ein Innendurchmesser Dₑ der freien Endstruktur 87a des Stützbauteils 86a. Dabei handelt es sich bei dem Außendurchmesser Dₛ, der auch als Nabenscheibendurchmesser bezeichnet werden kann, um den größten Durchmesser des scheibenartigen Bauteils 83a an dem sich in eine axiale Richtung erstreckenden Abschnitt 94a, des Umfangsabstützbereichs 84a. Die Dämpferelementeneinheiten 56a können bei manchen Ausführungsbeispielen so besser umschlossen werden und nicht so leicht aus einem Dämpferelementenkanal bzw. einem Federkanal, wenn die Dämpferelementeneinheit als Feder ausgebildet ist, austreten. Der Dämpferelementenkanal wird zumindest teilweise zwischen dem Stützbauteil 86a und dem sich im Wesentlichen parallel zu der axialen Richtung erstreckenden Bereich 93a des Umfangsabstützbereichs 84 bzw. des scheibenartigen Bauteils 83a gebildet. Ferner könnte eine Dämpferelementeneinheitenansteuerung oder Federansteuerung besser erfolgen, da die Dämpferelementeneinheiten 56a oder Federn in einem radial weiter außen liegenden Bereich angesteuert werden können. Zur Montage können die beiden Bauteile bei manchen Ausführungsbeispielen nicht in axialer Richtung zusammengeführt werden, weil der Innendurchmesser Dₑ des Stützbauteils 86a kleiner ist als der Außendurchmesser Dₛ des scheibenartigen Bauteils 83a. Das scheibenartige Bauteil 83a kann dann bei manchen Ausführungsbeispielen in das Stützbauteil 86a durch Kippen eingefädelt werden.

Bei einigen weiteren Ausführungsbeispielen kann das Stützbauteil ohne die freie Endstruktur ausgebildet sein. Bei solchen Fällen kann das Stützbauteil an seiner geöffneten Seite einen Innendurchmesser aufweisen, der auch als Öffnungsdurchmesser bezeichnet werden kann, der kleiner ist als der Außendurchmesser des scheibenartigen Bauteils bzw. der Nabenscheibe.

In seinem radial inneren Bereich bildet dieses scheibenartige Bauteil 83a die zweite Primärseite 60a. Diese ist an beiden axialen Seiten umgeben von zwei die zweite Sekundärseite 62a bereitstellenden Deckscheibenelementen, welche radial innen mit der Abtriebsnabe 50a verbunden sind und von welchen eines, nämlich das in Fig. 2 rechts dargestellte, mit dem Turbinenrad 22a fest verbunden ist, beispielsweise durch Vernietung. Bei dem Ausführungsbeispiel der Fig. 4 ist dazu als Verbindungsstruktur 102a ein Niet oder Nietbolzen vorgesehen. Um zu vermeiden, dass das Verbindungselement 102a zum Verbinden des Turbinenrads 22a mit der Sekundärseite des Schwingungsdämpfers das Leitrad 28a berührt, ist an diesem in axialer Richtung eine entsprechende Aussparung 45a vorgesehen.

Das Turbinenrad 22a ist mit der Schwingungsdämpfungsanordnung 32a auf einer radial vergleichbaren Höhe zu einem Mittelpunkt M_{b} der Dämpferelementeneinheit 68a der radial innen liegenden Dämpferelementenanordnung 66a verbunden. Die radial vergleichbare Höhe kann analog zu den bereits für radial vergleichbare Höhen genannten Werten von dem Mittelpunkt M_{b} abweichen. Dazu ist das Turbinenrad 22a, das auch als Turbine bezeichnet werden kann, an dem Deckscheibenelement 100a befestigt, das die Dämpferelementeneinheiten 68a der radial innen liegenden Dämpferelementenanordnung 66a in axialer Richtung auf einer dem Turbinenrad 22a zugewandten Seite abdeckt. Mit anderen Worten weist das Deckscheibenelement 100a eine Verbindung zu der Turbinenschale auf. Ein Moment des Turbinenrads 22a kann bei manchen Ausführungsbeispielen über das linke Deckscheibenelement 106a laufen.

Durch die genannten Maßnahmen kann das Turbinenrad 22a an einer Turbinennabe bzw. der Abtriebsnabe 50a angebunden werden. Indem das Turbinenrad 22a an dem Deckscheibenelement 100a neben den möglicherweise als Federn ausgebildeten Dämpferelementeneinheiten 68a verbunden wird, kann eine bauraumsparende Konstruktion ermöglicht werden. Das Turbinenrad 22a ist so mit der Sekundärseite 62a des Drehmomentwandlers 10a verbunden. Ferner kann durch die beschriebene Art der Anbindung eine axiale Steifigkeit des Turbinenrads 22a bzw. der Turbine vergrößert werden. So könnte bei unterschiedlichen Betriebszuständen eine geringere Verformung des Turbinenrads 22a ermöglicht werden, weil das Deckscheibenelement 100a bei manchen Ausführungsbeispielen eine größere Dicke und/oder Steifigkeit aufweist als das Turbinenrad 22a.

Die Steifigkeit des Deckscheibenelements 100a kann sich ergänzend oder alternativ zu der höheren Materialstärke auch durch die Form des Deckscheibenelements 100a, beispielsweise durch ein in diesem ausgebildetes Federfenster, ergeben. Das Deckscheibenelement 100a weist in einer radialen Höhe, in der sich die Dämpferelementeneinheiten 68a befinden, einen Dämpferelementeneinheitenansteuersteg 101a und einen äußeren Begrenzungsbereich 103a auf. In axialer Richtung zwischen dem Dämpferelementeneinheitenansteuersteg 101a und dem äußeren Begrenzungsbereich 103a kann sich zum Beispiel das Federfenster ausbilden. Die Verbindung zwischen dem Turbinenrad 22a und dem Deckscheibenelement 100a erfolgt an dem Begrenzungsbereich 103a. In Umfangsrichtung können dabei jeweils eine Mehrzahl von Verbindungstrukturen 102a vorgesehen sein. Beispielsweise können diese in Gruppen und in Umfangsrichtung jeweils zwischen zwei in Umfangsrichtung benachbarten Dämpferelementeneinheitenansteuerstegen 101a angeordnet sein. Der Dämpferelementeneinheitenansteuersteg 101a, der auch als Federansteuersteg bezeichnet werden kann, und der Begrenzungsbereich 103a sind in einem Kontaktbereich 105a, der radial außerhalb des Federfensters oder einer Öffnung, die sich zwischen dem Dämpferelementeneinheitenansteuersteg 101a und dem Begrenzungsbereich 103a ergibt, wieder verbunden. Auch an einem radial innen liegenden Kontaktbereich 107a trifft der Dämpferelementeneinheitenansteuersteg 101a wieder mit dem Begrenzungsbereich 103a zusammen. Der radial außen liegende Kontaktbereich 105a ist so ausgebildet, dass er die Dämpferelementeneinheiten 68a zumindest abschnittsweise umschlingt, jedoch einen Mittelpunkt M_{b} der Dämpferelementeneinheit 68a in axialer Richtung nicht übergreift.

Das Deckscheibenelement 100a ist radial innerhalb der Dämpferelementenanordnung 66a mit einem weiteren Deckscheibenelement 106a verbunden, das dem scheibenartigen Bauteil 83a auf einer dem Turbinenrad 22a abgewandten Seite zugeordnet ist. Dazu ist ein Verbindungselement 104a eingesetzt, das jeweils eine Öffnung des Deckscheibenelements 100a, eine Öffnung in dem Deckscheibenelement 106a und das Federfenster 88a, in einem Bereich radial unterhalb der Dämpferelementeneinheit 68a des scheibenartigen Bauteils 83a durchgreift. Das Verbindungselement 104a kann ebenfalls als Niet oder Nietbolzen ausgebildet sein. Zwischen den Deckscheibenelementen 100a und 106a in dem Bereich des Federfensters 88a des scheibenartigen Bauteils 83a wird radial außerhalb des Verbindungselements 104a bzw. einer Verbindungsstelle ein Dämpferelementenkanal zur Aufnahme der Dämpferelementeneinheiten 68a gebildet.

Das scheibenartige Bauteil 83a ist gegenüber einer Abtriebsnabe 50a bzw. gegenüber einer von der Abtriebsnabe 50a in radiale Richtung abragenden Gleitstruktur 51a gleitend gelagert. Beispielsweise kann eine Gleitlagerung 53a als Stahl-Stahl-Kontakt ausgebildet sein. Radial innerhalb der Gleitlagerung 53a sind die beiden Deckscheibenelemente 100a und 106a mit der Abtriebsnabe 50a bzw. der Gleitstruktur 51a, die als Fortsatz der Abtriebsnabe 50a ausgebildet ist, verbunden. Dazu wird als Verbindungsmittel 49a ein Niet oder Nietbolzen eingesetzt. Bei einigen weiteren, nicht dargestellten Ausführungsbeispielen kann als Verbindungsmittel auch jedwedes andere Verbindungsmittel beispielsweise Abstandsstücke, Distanzbolzen Schraub-, Kleb-, Klipp-, Schweiß-, Crimpverbindung oder dergleichen eingesetzt werden.

Um zu vermeiden, dass ein Kupplungskolben 48a der Überbrückungskupplung 46a in axialer Richtung an einen Kopf des Verbindungsmittels 49a oder das Verbindungsmittel 49a selbst anläuft, ist das Verbindungsmittel 49a in axialer Richtung mit einem Schutzelement 47a abgedeckt. Das Schutzelement 47a weist einen C-förmigen Querschnitt auf. In manchen Fällen kann das Schutzelement 47a aus einem weicheren Werkstoff als der Kupplungskolben 48a ausgebildet sein, beispielsweise Kunststoff.

Das scheibenartige Bauteil 83a bildet insbesondere mit seinem zwischen den beiden Dämpferelementenanordnungen 54a, 66a liegenden Bereich den Auslenkungsmassenträger 70a, an welchem die Auslenkungsmassen 74a wieder im Bereich beispielsweise von jeweils zwei Kopplungsbereichen 76a zur Durchführung einer Auslenk- bzw. Pendelbewegung getragen sind. In dem in Fig. 4 dargestellten Beispiel sind die Auslenkungsmassen 74a mit jeweils zwei beidseits des Scheibenteils 83a liegenden Masseteilen ausgebildet, die beispielsweise auch miteinander fest verbunden sein können.

Dadurch, dass die Verbindungsstruktur 85a und die Verbindungsstruktur 102a, die auch als Turbinenniet bezeichnet werden kann, jeweils in axialer Richtung neben und im Wesentlichen innerhalb einer radialen Ausdehnung der Dämpferelementenanordnungen 66a und 54a angeordnet sind, befinden sich radial innerhalb, entlang des scheibenartigen Bauteils 83a keine weiteren Bauteile.

Manche Verbindungselemente zum Verbinden einzelner Komponenten oder Bauteile, sowohl in dem Bereich der radial außen liegenden und der radial innen liegenden Dämpferelementenanordnungen, würden den Bauraum oder einen Raum zum Anordnen der Auslenkungsmassen verkleinern, der sich in radialer Richtung zwischen den beiden Dämpferelementenanordnungen befindet. Dies ist beispielsweise dann der Fall, wenn sie, wie bei manchen konventionellen Schwingungsdämpfungsanordnungen radial außerhalb der radial innen liegenden Dämpferelementenanordnung und/oder radial innerhalb der radial außen liegenden Dämpferelementenanordnung angeordnet werden. Diese konventionellen Verbindungsmittel, die als Nieten, Abstandsstücke, Distanzbolzen oder dergleichen ausgebildet sein können, benötigen oft auch deshalb viel Bauraum, weil das scheibenartige Bauteil oder die Nabenscheibe in einem Bereich des Verbindungselements selbst und in einem Bereich des Verdrehwinkels der Dämpferelementeneinheiten freigestellt ist. Indem ein die Deckscheibenelemente 100a und 106a verbindendes Zusatzelement radial außerhalb der Dämpferelementenanordnung 66a entfällt, kann der so frei gewordene Bauraum anderweitig genutzt werden. Dadurch könne beispielsweise die Dämpferelementeneinheiten 56a und/oder 68a und/oder auch die Auslenkungsmassen 74 größer ausgebildet werden.

Durch die Ausbildung der Schwingungsdämpfungsanordnung 32a nach dem Ausführungsbeispiel der Fig. 4 kann also ermöglicht werden, dass sich in einem Bauraum, der im Wesentlichen einer radialen und axialen Ausdehnung des scheibenartigen Bauteils 83a entspricht, nur die Dämpferelementenanordnungen 54a und 66a sowie die Auslenkungsmassen 74a, die auch als drehzahladaptive Tilgergewichte bezeichnet werden können, befinden. So kann bei manchen Ausführungsbeispielen eine gute Entkopplungsgüte erreicht werden. Mit anderen Worten sind die Dämpferelementenanordnungen 54a und 66a und die Auslenkungsmassen 74a radial verschachtelt angeordnet.

Die bei konventionellen Ausführungen eingesetzten Verbindungsmittel zum Verbinden der Deckscheibenelemente in einem radial äußeren Bereich sollen eigentlich dazu dienen, Kräfte, beispielsweise Spreizkräfte, der Dämpferelementeneinheiten 68a aufzunehmen, um die Belastung in den Deckscheibenelementen zu senken. Um die Deckscheibenelemente 100a und 106a auch ohne die Verbindung radial außerhalb der Dämpferelementeneinheit 68a ausreichend steif auszubilden, sind die Deckscheibenelemente 100a und 106a versteift, beispielsweise in axialer Richtung. Dazu können die Deckscheibenelemente 100a und 106a eine größere Materialstärke oder Blechdicke aufweisen. Ergänzend oder alternativ können beispielsweise entsprechende Stanz- oder Prägestrukturen eingebracht sein, die zur Versteifung dienen.

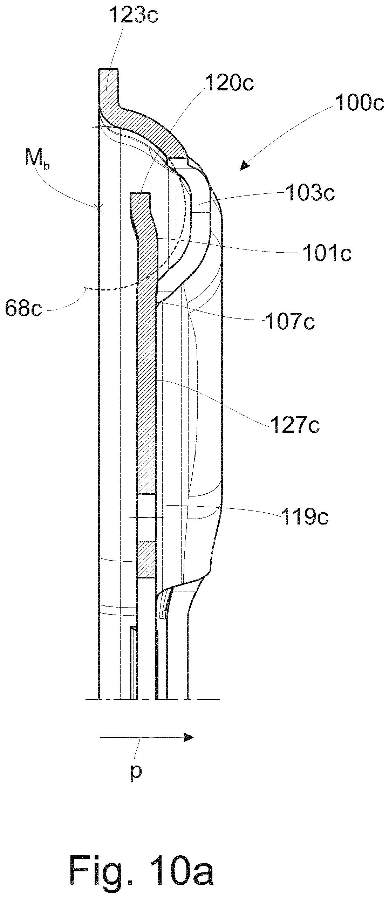

Ein weiteres Ausführungsbeispiel für ein Deckscheibenelement, das sich für die Schwingungsdämpfungsanordnung und eine Montage ohne die radial innen liegenden Verbindungsmittel eignet, ist in den Fig. 10a) und b) gezeigt.

In Fig. 5a) ist eine Axialansicht der Torsionsdämpferanordnung 34a, betrachtet von der linken Seite in Fig. 4, dargestellt. Man erkennt das scheibenartige Bauteil 83a mit seinen nach radial außen greifenden Abstützbereichen 84a, an welchen sich in Umfangsrichtung die Dämpferelementeneinheiten 56a abstützen. In seinem radial inneren Bereich weist das Bauteil 83a zur Abstützung bzw. Aufnahme der Dämpferelementeneinheiten 68a Öffnungen bzw. so genannte Federfenster 88a auf, die in Umfangsrichtung durch jeweilige Stegbereiche 90a getrennt sind. Deutlich zu erkennen sind auch die in jeweiligen Kopplungsbereichen 76a des auch durch das scheibenartige Bauteil 83a bereitgestellten Auslenkungsmassenträgers 70a gebildeten gekrümmten Führungsbahnen 80a mit radial außen liegendem Scheitelbereich.

In Fig. 5b) ist das in Fig. 5a) auch erkennbare scheibenartige Bauteil 83a in seiner Funktionalität als Auslenkungsmassenträger 70a dargestellt. Zu erkennen sind hier insgesamt vier Auslenkungsmassen 74a, wobei jede an zwei in Umfangsabstand zueinander liegenden Kopplungsbereichen 76a durch ein dort jeweils positioniertes Kopplungselement 82a an den Auslenkungsmassenträger 70a angekoppelt ist. Zu erkennen sind in Fig. 5b) auch die in den Auslenkungsmassen 74a bzw. den beiden Teilen einer jeweiligen Auslenkungsmasse 74a gebildeten gekrümmten Führungsbahnen 78a mit radial innen liegendem Scheitelbereich. Man erkennt in Fig. 5b) auch in Zuordnung zu den jeweiligen Umfangsendbereichen der Auslenkungsmassen 74a ausgebildete Öffnungen 92a im scheibenartigen Bauteil 83a. Durch diese Öffnungen 92a erstrecken sich die beiden Teile einer jeweiligen Auslenkungsmasse 74a miteinander verbindende Elemente, beispielsweise Nietbolzen oder dergleichen.

Man erkennt in Fig. 5, dass bei dieser Ausgestaltungsart bzw. Auslegung der Torsionsdämpferanordnung 34a einerseits und der Auslenkungsmassenpendelanordnung 36a andererseits jeder Torsionsschwingungsdämpfer 38a, 40a vier in Umfangsrichtung aufeinander folgende Dämpferelementeneinheiten 56a, 68a aufweist, die beispielsweise jeweils in einander zugeordneten, also gleichen Umfangsbereichen liegen, so dass die Abstützbereiche 84a die Stegbereiche 90a zwischen den Öffnungen 88a in Radialrichtung im Wesentlichen fortsetzen, zu diesen also im Wesentlichen keinen Umfangsversatz aufweisen. Mit anderen Worten sind bei dem Ausführungsbeispiel der Fig. 5 der Stegbereich 90a und ein Abstützbereich oder Umfangsabstützbereich 84a, der auch als Steg bezeichnet werden kann, fluchtend zueinander, ohne Winkelversatz ausgebildet. Auch im Bereich der Auslenkungsmassenpendelanordnung 36a sind insgesamt vier Auslenkungsmassen 74a vorgesehen, die in Umfangsrichtung so positioniert sind, dass sie in Umfangsrichtung zentriert liegen bezüglich eines jeweiligen Abstützbereichs 84a bzw. Stegbereichs 90a. Dies hat zur Folge, dass die für einen jeweiligen Kopplungsbereich 76a im Auslenkungsmassenträger 70a zum Bereitstellen der gekrümmten Führungsbahnen 80a zu erzeugenden Öffnungen beidseits der Abstützbereiche 84a bzw. Stegbereiche 90a liegen und somit eine Materialschwächung im scheibenartigen Bauteil 83a insbesondere dort, wo die Drehmomenteinleitung bzw. Übertragung auf die bzw. von den Dämpferelementeneinheiten 56a, 68a erfolgt, vermieden wird. Dies bedeutet, dass trotz baulicher Integration des Auslenkungsmassenträgers 70a in ein Bauteil, welches gleichzeitig auch eine Drehmomentübertragungsfunktionalität in der Torsionsdämpferanordnung 34a aufweist, aufgrund einer Schwächungen vermeidenden Positionierung bzw. aufgrund der gleichen Anzahl an Dämpferelementeneinheiten einerseits und Auslenkungsmassen andererseits eine Übertragung auch hoher Drehmomente möglich ist.

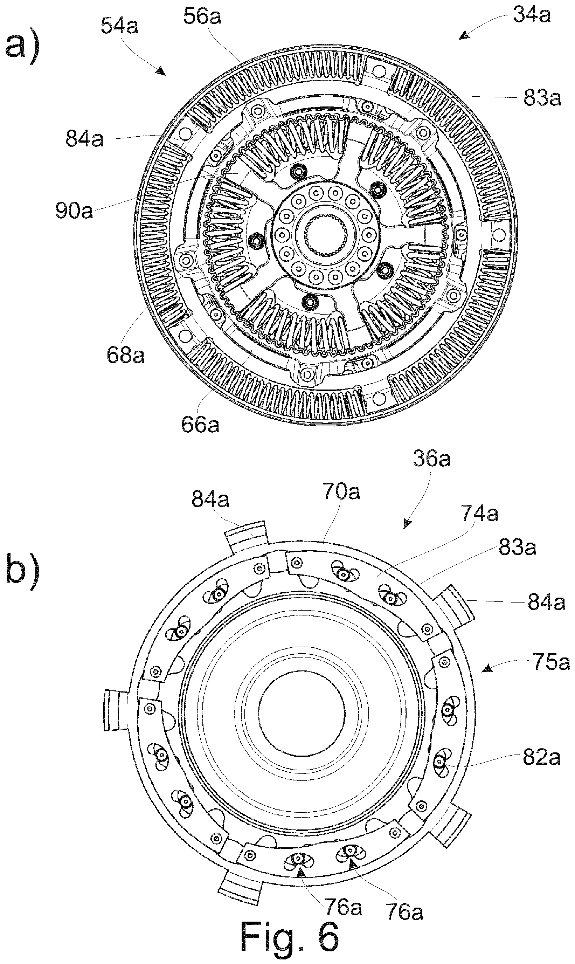

Die Fig. 6a) und 6b) zeigen in einer der Fig. 5 entsprechenden Art und Weise einen dem gleichen Aufbauprinzip unterliegenden Aufbau, jedoch mit einer anderen Teilung im Bereich der Dämpferelementeneinheiten 56a, 68a einerseits und der Auslenkungsmassen 74a andererseits. Zu erkennen sind insgesamt fünf erste Dämpferelementeneinheiten 56a und fünf jeweils im Wesentlichen im gleichen Radialbereich wie die ersten Dämpferelementeneinheiten 56a angeordnete zweite Dämpferelementeneinheiten 68a. Auch hier setzen also die Abstützbereiche 84a die Stegbereiche 90a in radialer Richtung im Wesentlichen fort. Die Fig. 6b) zeigt in entsprechender Weise insgesamt fünf in Umfangsrichtung aufeinander folgende Auslenkungsmassen 74a, die nunmehr jedoch in Umfangsrichtung so positioniert sind, dass sie näherungsweise mittig zwischen zwei in Umfangsrichtung aufeinander folgenden Abstützbereichen 84a des scheibenartigen Bauteils 83a liegen. Ebenso wie bei der in Fig. 3 dargestellten Ausgestaltungsart liegt hier also ein Verhältnis zwischen der Anzahl an ersten Dämpferelementeneinheiten 56a und auch der Anzahl an zweiten Dämpferelementeneinheiten 68a zur Anzahl an Auslenkungsmassen 74a bei 1.

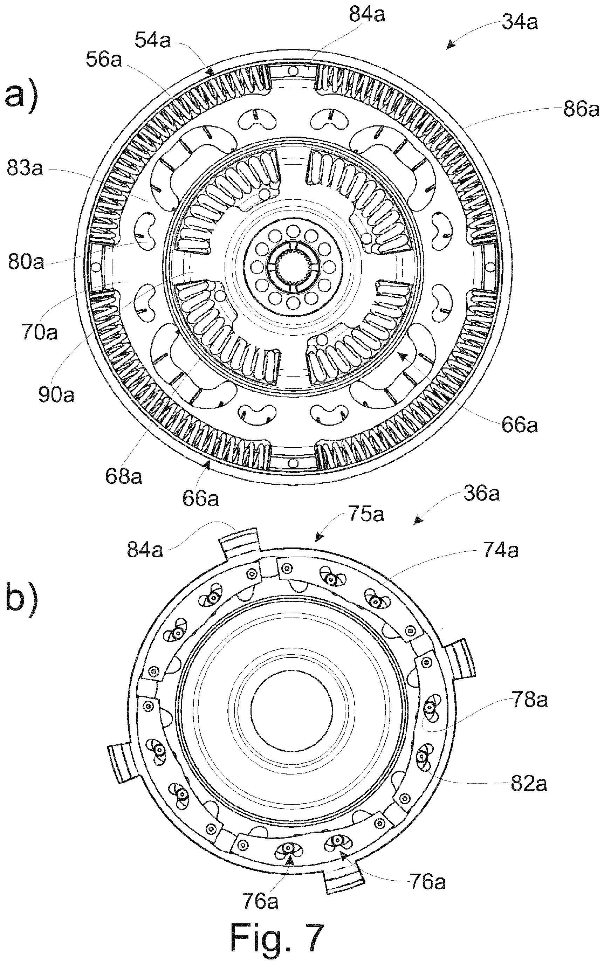

Die Fig. 7 zeigt in ihrer Darstellung a) wieder ausgehend von dem in Fig. 4 gezeigten Aufbau der Schwingungsdämpfungsanordnung 32a die Ausgestaltung der Torsionsdämpferanordnung 34a mit jeweils vier ersten Dämpferelementeneinheiten 56a und vier zweiten Dämpferelementeneinheiten 68a, so wie dies auch mit Bezug auf die Fig. 5a) bereits beschrieben wurde. Diese Torsionsdämpferanordnung 34a ist nunmehr kombiniert mit einer Auslenkungsmassenpendelanordnung 36a mit insgesamt fünf in Umfangsrichtung aufeinander folgenden Auslenkungsmassen 74a, also einem Aufbau, wie er grundsätzlich mit Bezug auf die Fig. 6b) bereits erläutert wurde. Hier liegt das Verhältnis der Anzahl der ersten Dämpferelementeneinheiten 56a bzw. auch der zweiten Dämpferelementeneinheiten 68a zur Anzahl der Auslenkungsmassen 74a bei 0,8.

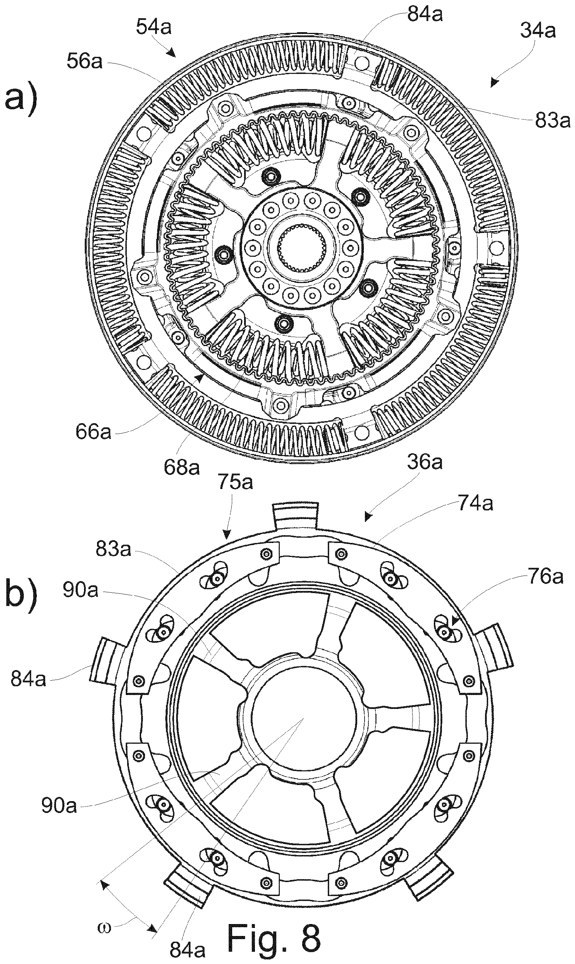

Eine weitere Abwandlung ist in Fig. 8 dargestellt. Dort ist in der Abbildung 8a) die Torsionsdämpferanordnung 34a mit jeweils fünf ersten Dämpferelementeneinheiten 56a und fünf zweiten Dämpferelementeneinheiten 68a erkennbar, so wie dies auch bei der Ausgestaltungsform der Fig. 6a) gezeigt ist. In Zuordnung zu dieser Torsionsdämpferanordnung 34a ist in Fig. 8b) eine Auslenkungsmassenpendelanordnung 36a mit insgesamt vier in Umfangsrichtung aufeinander folgenden Auslenkungsmassen 74a erkennbar. Das Verhältnis der Anzahl der ersten Dämpferelementeneinheiten 56a bzw. auch der zweiten Dämpferelementeneinheiten 68a zur Anzahl an Auslenkungsmassen 74a liegt hier also bei 1,25.

Im Gegensatz zu dem Ausführungsbeispiel der Fig. 5 weisen der Umfangsabstützbereich 84a und der Stegbereich 90a bei dem Ausführungsbeispiel der Fig. 8 einen Winkelversatz zueinander auf. Mit anderen Worten schließt der stegartig ausgebildete Stegbereich 90a und der Umfangsabstützbereich 84a bzw. deren gestrichelt dargestellte Mittellinien einen Winkel ω ein. Der Winkel ω kann zum Beispiel in einem Wertebereich mit einem Anfangs- und/oder Endwert von 0°, 1°, 4°, 5°, 8° und/oder 10° liegen. Durch den Winkelversatz zwischen dem Steg für die radial außen liegende Dämpferelementenanordnung 54a zu dem Steg 90a für die radial innen liegenden Dämpferelementenanordnung 66a verändert sich eine Spannungssituation oder ein Spannungsverlauf in dem scheibenartigen Bauteil 83a bzw. der so bezeichneten Nabenscheibe. Für manche Winkel, beispielsweise kleine Winkel, ggf. 1° kann sich bei einigen Ausführungsbeispielen ein Spannungsoptimum ergeben. Bei manchen Ausführungsbeispielen kann so ein Moment von dem auch als äußerer Steg bezeichneten Umfangsabstützbereich 84a direkt nach radial innen auf den Stegbereich 90a geleitet werden.

Die Fig. 5 bis 8 zeigen, dass hinsichtlich der Anzahlen bzw. des Verhältnisses der Anzahlen der Dämpferelementeneinheiten einerseits und der Auslenkungsmassen andererseits eine Variabilität besteht, die es ermöglicht, das Schwingungsverhalten der Torsionsdämpferanordnung 34a einerseits und der Auslenkungsmassenpendelanordnung 36a andererseits in optimaler Weise an die auftretenden Anforderungen anzupassen. Insbesondere dann, wenn eine Integration der Auslenkungsmassenpendelanordnung 36a in die Torsionsdämpferanordnung 34a realisiert ist, also beispielsweise ein Drehmomentübertragungselement der Torsionsdämpferanordnung 34a den oder einen Teil des Auslenkungsmassenträgers 70a bereitstellt, ist eine Teilung von 1:1, wie dies in den Fig. 5 und 6 gezeigt ist, bei manchen Ausführungsbeispielen günstig, da trotz dieser Funktionenverschmelzung eine sehr stabile Konfiguration des drehmomentübertragenen Bauteils der Torsionsdämpferanordnung 34a, welches gleichzeitig auch eine Funktion im Bereich der Auslenkungsmassenpendelanordnung 36a übernimmt, bereitgestellt werden kann.

Es ist darauf hinzuweisen, dass selbstverständlich bei der in den Fig. 4 bis 8 dargestellten Ausgestaltungsvariante alle weiteren vorangehend mit Bezug auf die Fig. 1 beschriebenen Auslegungsparameter einzeln bzw. in Kombination realisiert sein können.

In Bezug auf die Fig. 4 wird nachfolgend ein Ausführungsbeispiel einer hydrodynamischen Kopplungsvorrichtung und auch hier wieder in Form eines hydrodynamischen Drehmomentwandlers bzw. einer darin enthaltenen Schwingungsdämpfungsanordnung beschrieben. Hier sind ebenfalls Komponenten, welche hinsichtlich Aufbau bzw. Funktion den vorangehend beschriebenen Komponenten entsprechen, mit dem gleichen Bezugszeichen unter Ersetzen bzw. Hinzufügen eines Anhangs "b" bezeichnet. Da der grundsätzliche Aufbau des Drehmomentwandlers 10b dem vorangehend beschriebenen entspricht, werden im Folgenden lediglich einige Unterschiede zu den Ausgestaltungsformen gemäß den Fig. 1 und 4 beschrieben. Selbstverständlich können alle beschriebenen Merkmale sowohl einzeln wie auch in Kombination bei weiteren, nicht dargestellten Ausführungsbeispielen implementiert sein.

Der Gehäuseschale 16b ist im Bereich des Pumpenrads 18b ein Wuchtgewicht 108b zugeordnet. Das Wuchtgewicht 108b kann beispielsweise vor oder nach der Montage des Drehmomentwandlers 10b an der Gehäuseschale 16b befestigt werden, um einen Rundlauf zu verbessern.

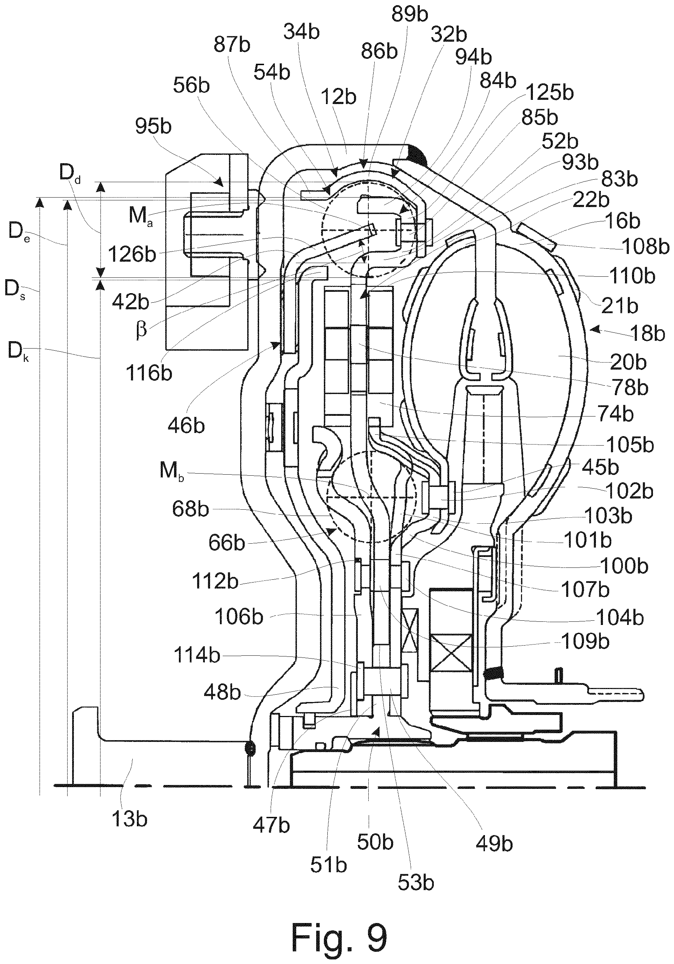

Der Kupplungskolben 48b weist bei dem Ausführungsbeispiel der Fig. 9 einen bei vergleichbarer Baugröße größeren Durchmesser Dₖ auf, als der Kupplungskolben 48a bei dem Ausführungsbeispiel der Fig. 4. Der Kupplungskolben 48b bzw. dessen radiale Ausdehnung Dₖ ist größer als ein Radius, auf dem sich eine Außenkante 110b der Auslenkungsmassen 74b befindet. Bei manchen Ausführungsbeispielen kann dies für manche Betriebszustände und bei anderen Ausführungsbeispielen, kann dies für alle Betriebszustände der Fall sein. Bei dem Ausführungsbeispiel der Fig. 4 weist der Kupplungskolben 48a einen Radius auf, der etwas größer ist als ein Radius, auf dem sich die Führungsbahn 78a für die Auslenkungsmassen 74a befindet. Dadurch, dass der Radius Dₖ des Kupplungskolbens 48b so groß wie möglich gewählt wird, kann bei manchen Ausführungsbeispielen ein Betätigen der Überbrückungskupplung 46b bzw. das Führen der als Lamelle ausgebildeten Primärseite 42b vereinfacht und/oder gleichmäßiger bewirkt werden. Der Radius Dₖ wird bei manchen Ausführungsbeispielen durch die Bauform der radial außen liegende Primärseite 42b begrenzt. Die Primärseite 42b weist in einem radial außen liegenden Bereich einen Eingriffsabschnitt 126b auf, der in Wirkverbindung mit der radial außen liegenden Dämpferelementenanordnung 54b gebracht werden kann bzw. steht. Dazu ragt die Primärseite 42b bzw. der Eingriffsabschnitt 126b bei manchen Betriebszuständen mit einem Ende bis mindestens zu einem Mittelpunkt Mₐ der Dämpferelementeneinheit 56b. Der Eingriffsabschnitt 126b ragt von einem, sich im Wesentlichen parallel zu der radialen Richtung erstreckenden Bereich der Primärseite 42b ab und erstreckt sich in Richtung der Dämpferelementenanordnung 54b. Dabei schließt der Eingriffsabschnitt 126b mit der axialen Richtung in einen Winkel β ein, der zwischen 0° und 89°, beispielsweise zwischen 15° und 50° betragen kann. Der Kupplungskolben 48b kann also bei manchen Ausführungsbeispielen eine größtmögliche radiale Ausdehnung aufweisen, wenn er sich, wie bei dem Ausführungsbeispiel der Fig. 9 bis zu einer radialen Höhe erstreckt, in der der Eingriffsabschnitt 126b einen radialen Bauraum für den Kupplungskolben 48b begrenzt.

Der Kupplungskolben 48b weist an seinem radial außen liegenden Ende einen sich im Wesentlichen in eine axiale Richtung erstreckenden Endabschnitt 116b auf. So könnte ggf. eine Steifigkeit des Kupplungskolbens 48b erhöht sein. Bei manchen Ausführungsbeispielen kann der Kupplungskolben 48b nach radial innen eine Notanlauffunktion für die Primärseite 42b darstellen. So könnte ggf. vermieden werden, dass sich die Primärseite 42b bei manchen Betriebszuständen zu weit nach radial innen bewegt oder verformt.

Unter extremen Betriebszuständen kann sich die Dämpferelementenanordnung 54b mit dem Stützbauteil 86b und dem scheibenartigen Bauteil 83b in axialer Richtung zu der Lamelle bzw. der Primärseite 42b bewegen. Aufgrund von großem Spiel oder langen Toleranzketten könnte es dann ggf. passieren, dass die freie Endstruktur 87b des Stützbauteils 86b die auch als Bund des Halteblechs bezeichnet werden kann, das Gehäuse 12b berührt. Dies ist unerwünscht, da bei geöffneter Überbrückungskupplung 46b, die auch als Wandlerkupplung bezeichnet werden kann, das Stützbauteil 86b zu dem Gehäuse 12b die volle Differenzdrehzahl von Motor und Getriebe aufweisen kann. Dadurch kann evtl. ein hoher Verschleiß und/oder Späne auftreten. Um auch bei ungünstigen Betriebszuständen eine Betriebssicherheit zuverlässig zu erhöhen, ist bei dem Ausführungsbeispiel der Fig. 9 die Lamelle, die die radial außen liegenden Primärseite 42b ausbildet, so geformt bzw. ausgebildet, dass sie in axialer Richtung an der radial außen liegenden Dämpferelementenanordnung 54b anlaufen oder diese berühren kann, vor die Sekundärseite 52b oder deren Bauteile das Gehäuse 12b berühren können. Dazu kann die radial außen liegenden Primärseite 42b bei manchen Betriebszuständen den Umfangsabstützbereich 84b beispielsweise an dem Abschnitt 125b berühren.

Indem die Dämpferelementenanordnung 54a, die auch als Federsatz bezeichnet werden kann, bevor ein Kontakt zwischen dem Gehäuse 12b und der Sekundärseite 52b auftritt, in axialer Richtung an die erste oder radial außen liegende Primärseite 42b anläuft bzw. von dieser gestützt wird, kann ein Verschleiß zumindest minimiert werden. Dies kann zum einen dadurch möglich sein, weil an einer Berühr- oder Kontaktstelle zwischen der Primärseite 42b und dem Federsatz bzw. dem Umfangsabstützbereich 84b nur die Winkelbewegung der Dämpferelementenanordnung 54b auftritt und nicht die volle Differenzdrehzahl. Ferner kann die Primärseite 42b, beispielsweise durch Materialwahl und/oder -bearbeitung, so ausgebildet werden, dass der Verschleiß zusätzlich reduziert ist. Dazu kann unter Umständen ein Härteverfahren, wie induktives Härten oder ein Einsatzhärten angewandt werden.

Indem das axiale Berühren zwischen radial außen liegender Primärseite 42b und Sekundärseite 52b zugelassen wird, kann gegenüber manchen Ausführungsbeispielen, bei denen eine axiale Berührung zwischen der Sekundärseite bzw. den Dämpferelementeneinheiten und der Primärseite vermieden wird, ein Entkopplungsverhalten verbessert sein. Dies kann ggf. der Fall sein, weil bei solchen anderen Lösungen unter Umständen die Dämpferelementeneinheiten oder Federn einen erheblich verkleinerten Durchmesser oder Baugröße aufweisen können, was sich schlechter auf das Entkopplungsverhalten auswirken kann.

Mit anderen Worten wird bei manchen Ausführungsbeispielen eine axiale Führung der radial außen liegenden Dämpferelementenanordnung 54b durch die Primärseite 42b ermöglicht. Die Primärseite 42b bzw. die Lamelle kann ggf. durch die Dämpferelementenanordnung 54b, die auch als Federsatz bezeichnet werden kann, zentriert werden.

Das Deckscheibenelement 106b weist eine Ausnehmung 112b auf. Die Ausnehmung 112b ist ausgebildet, um das Verbindungselement 104b in axialer Richtung bzw. einen Kopf des Verbindungselements 104b entlang seiner Ausdehnung in eine axiale Richtung vollständig aufzunehmen. Dadurch kann ggf. ein Bauraum in axialer Richtung reduziert werden. Ferner könnte ggf. auch vermieden werden, dass der Kupplungskolben 48b, der in radialer Richtung bis zu einer radialen Höhe auf der das Verbindungselement 104b liegt, parallel zu dem Deckscheibenelement 106b ausgebildet ist, an den Kopf des Verbindungselements 104b anläuft. Analog ist auch das Verbindungsmittel 49b in einer Ausnehmung 114b in dem Deckscheibenelement 106b versenkt.

Als weiterer Beitrag, um einen axialen Bauraum zu reduzieren, ist auch das Schutzelement 47b mit einer geringeren axialen Baugröße als das Schutzelement 47a ausgebildet. Dazu ist das Schutzelement 47b lediglich scheibenförmig und ohne die in axiale Richtung weisenden Fortsätze ausgebildet.

Das Deckscheibenelement 100b ist im Wesentlichen analog zu dem Deckscheibenelement 100a ausgebildet, unterscheidet sich aber in der Form des Kontaktbereichs 105b. Der Kontaktbereich 105b des Deckscheibenelements 100b erstreckt sich auf einer axial vergleichbaren Höhe zu dem Mittelpunkt M_{b} der Dämpferelementeneinheit 68b im Wesentlichen parallel zu einer radialen Richtung. Die axial vergleichbare Höhe kann dabei ggf., entsprechend zu den für radial vergleichbare Höhen beschriebenen Bereichen, in axialer Richtung zu dem Mittelpunkt M_{b} beabstandet sein.

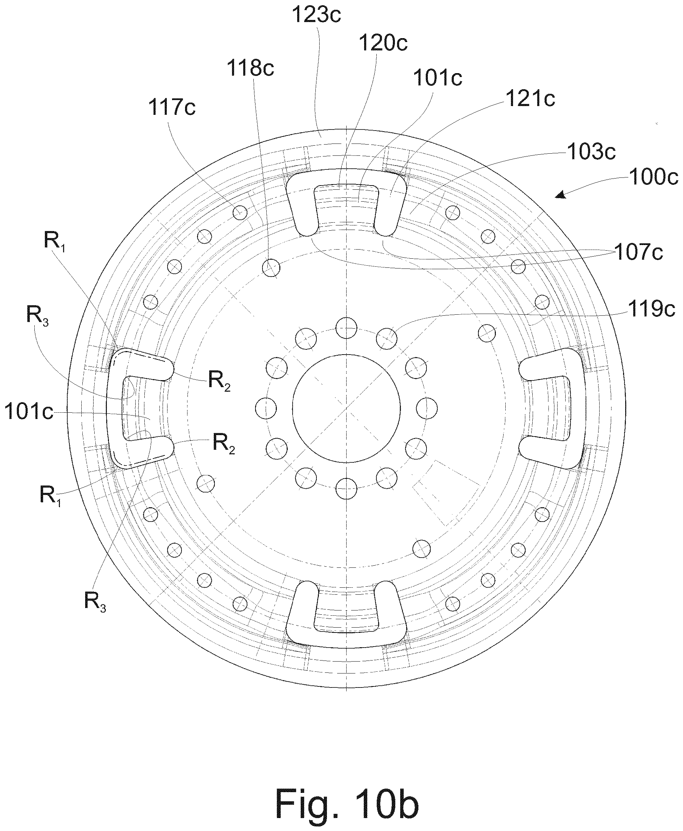

Die Fig. 10 zeigt in ihren Darstellungen a) und b) ein Deckscheibenelement, das einer radial innen liegenden Dämpferelementenanordnung beispielsweise auf einer dem Turbinenrad zugewandten Seite zugeordnet sein kann. Für dieses sind Komponenten, welche hinsichtlich Aufbau und Funktion den vorangehend beschriebenen Komponenten entsprechen, mit den gleichen Bezugszeichen durch Hinzufügen oder Ersetzen eines Anhangs "c" bezeichnet.

Das Deckscheibenelement 100c dient zur Aufnahme der gestrichelt dargestellten Dämpferelementeneinheit 68c bzw. bildet einen Teil eines Dämpferelementenkanals zur Aufnahme der Dämpferelementeneinheit 68c aus. Bei der mit 127c bezeichneten Seite handelt es sich um eine Außenseite. Diese kann dem Turbinenrad zugewandt sein.

Bei dem Deckscheibenelement 100c sind der Dämpferelementeneinheitenansteuersteg 101c und der Begrenzungsbereich 103c nur an einem radial innen liegenden Kontaktbereich 107c verbunden. Radial innen liegen zu dem Kontaktbereich 107c ist das Deckscheibenelement scheibenförmig, mit einer im Wesentlichen gleichmäßigen axialen Ausdehnung ausgebildet.

Der Dämpferelementeneinheitenansteuersteg 101c, der auch als Federansteuersteg ausgebildet sein kann, weist ein freies Ende 120c auf. Das freie Ende 120c ist nicht mit anderen Bereichen des Deckscheibenelements 100c als dem Dämpferelementeneinheitenansteuersteg 101c in Kontakt und berührt das Deckscheibenelement 100c nicht an dem Begrenzungsbereich 103c. Mit anderen Worten kann das Deckscheibenelement 100c auch als ein geöffnetes Abdeckblech bezeichnet werden.

Der Begrenzungsbereich 103c weist eine sich in Richtung der Außenseite 127c ausdehnende Wölbung auf, sodass auf der, der Außenseite 127 abgewandten Seite, ein Teil des Dämpferelementenkanals ausgebildet wird. Der Dämpferelementenkanal kann in manchen Fällen als Federkanal, zur Aufnahme von Federn oder Federelementen ausgebildet sein. Der Dämpferelementenkanal kann, auf einer der Außenseite 127 abgewandten Seite über ein weiteres, nicht dargestelltes Deckscheibenelement, ergänzt werden.

Die Wölbung des Begrenzungsbereichs 103c weist dabei im Wesentlichen eine Form auf, die der Form der Dämpferelementeneinheit 68c entspricht, zumindest in dem Bereich, mit dem sie an dem Begrenzungsbereich 103c anliegt. Ein radial außen liegender Bereich 123c des Begrenzungsbereichs 103c ist im Wesentlichen parallel zu einer radialen Richtung ausgebildet. Der radial außen liegende Bereich 123c erstreckt sich radial außerhalb der Dämpferelementeneinheit 68c bzw. des Dämpferelementenkanals, in dem diese aufgenommen werden kann. Eine der Außenseite 127 abgewandte Seite des radial außen liegenden Bereichs 123c befindet auf einer axialen Höhe einer Mitte des Dämpferelementenkanals. Mit anderen Worten, kann der Mittelpunkt M_{b} der Dämpferelementeneinheit 68c auf einer axial vergleichbaren Höhe zu der Außenseite 127 liegen. Bei einigen weiteren, nicht dargestellten Ausführungsbeispielen kann der außen liegende Bereich 123c auf einer anderen axialen Höhe des Dämpferelementenkanals angeordnet sein.

Bei manchen Ausführungsbeispielen wird das Deckscheibenelement 100c als Stanzteil hergestellt. Beispielsweise kann eine Stanzeinzugseite in Pfeilrichtung P liegen.

Dadurch, dass der Dämpferelementeneinheitenansteuersteg 101c, der bei manchen Ausführungsbeispielen auch als Federansteuersteg ausgebildet sein kann, nicht nach radial außen verbunden ist, wie bei den Deckscheibenelementen der anderen Ausführungsbeispiele, kann sich das Deckscheibenelement 100c, beispielsweise bei hohen Drehzahlen, frei in radialer Richtung ausdehnen, ohne dass es an dem Dämpferelementeneinheitenansteuersteg 101c nach radial innen gehalten wird. So kann das Entstehen von hohen Spannungen oder großen Spannungsspitzen in dem Deckscheibenelement 100c vermieden oder zumindest reduziert werden.

Wie in der Abbildung b) der Fig. 10 dargestellt, wird der Dämpferelementeneinheitenansteuersteg 101c dadurch gebildet, dass in das Deckscheibenelement 100c C-förmige Ausschnitte 121c eingebracht sind. Die Ausschnitte 121c weisen einen Bereich auf, der sich im Wesentlichen in eine Umfangsrichtung des Deckscheibenelements 100c erstreckt. Die radial innen liegende Begrenzung dieses Bereichs bildet das freie Ende 120c aus. An die beiden in Umfangsrichtung gegenüberliegenden Enden des Bereichs schließen jeweils über einen Radius R₃ und R₁ sich radial nach innen erstreckende Abschnitte des C-förmigen Ausschnitts 121c an. Die radial innen liegende Begrenzung dieser Bereich ist der Kontaktbereich 107c. Der C-förmige Ausschnitt 121c weist in dem Bereich über den Kontaktbereichen 107c jeweils einen Radius R₂ auf. Durch die Radien kann bei manchen Ausführungsbeispielen ein vorteilhafter Spannungsverlauf in dem Deckscheibenelement 100c erzielt werden.

Das Deckscheibenelement 100c umfasst vier Ausschnitte 121c bzw. vier Dämpferelementeneinheitenansteuerstege 101c. Diese sind jeweils in einem Winkelabstand von 90° zueinander angeordnet. Bei Deckscheibenelementen, die für eine andere Anzahl von Dämpferelementeneinheiten gedacht sind, können auch eine andere, größere oder kleinere Anzahl von Dämpferelementeneinheitenansteuerstegen ausgebildet sein.

Ferner sind in das Deckscheibenelement 100c in etwa auf einer radial vergleichbaren Höhe, auf der sich auch das freie Ende 120c des Dämpferelementeneinheitenansteuerstegs 101c befindet, eine Mehrzahl von Öffnungen 117c eingebracht. In Umfangsrichtung sind, jeweils zwischen zwei Dämpferelementeneinheitenansteuerstegen 101c, jeweils vier Öffnungen 117c vorgesehen. Diese dienen zum Beispiel zur Aufnahme einer Verbindungsstruktur, beispielsweise zum Verbinden des Turbinenrads 22a oder 22b mit dem Deckscheibenelement 100c. Bei einigen weiteren, nicht dargestellten Ausführungsbeispielen können eine andere Anzahl dieser Öffnungen vorgesehen sein, zum Beispiel zwei, drei, fünf oder mehr.

Das Deckscheibenelement 100c weist zwölf Öffnungen 119c auf, in einem radial innerhalb des Kontaktbereichs 107c liegenden Bereich. Diese dienen zur Aufnahme der Verbindungselemente zur Befestigung an der Abtriebsnabe. Bei einigen weiteren, nicht dargestellten Ausführungsbeispielen kann dazu auch eine andere Anzahl von Öffnungen vorgesehen sein.

Ferner sind in das Deckscheibenelement 100c, wie in der Darstellung b) erkennbar vier Öffnungen 118c eingebracht. Diese dienen zur Aufnahme eines Verbindungselements, beispielsweise zur Befestigung an dem scheibenartigen Bauteil 83a oder 83b. Bei einigen weiteren, nicht dargestellten Ausführungsbeispielen kann die Anzahl der Öffnungen 118c größer oder kleiner sein. Die Öffnung 118c ist radial fluchtend zu einer Öffnung 117c angeordnet, die sich benachbart zu dem Dämpferelementeneinheitenansteuersteg 101c befindet.

Die in der vorstehenden Beschreibung, den nachfolgenden Ansprüchen und den beigefügten Figuren offenbarten Ausführungsbeispiele sowie deren einzelne Merkmale können sowohl einzeln wie auch in beliebiger Kombination für die Verwirklichung eines Ausführungsbeispiels in ihren verschiedenen Ausgestaltungen von Bedeutung sein und implementiert werden.

## Patentansprüche

1. Schwingungsdämpfungsanordnung (32a; 32b), vorzugsweise für den Antriebsstrang eines Fahrzeugs, umfassend:
- eine Torsionsdämpferanordnung (34a; 34b), umfassend einen ersten Torsionsschwingungsdämpfer (38; 38a) mit einer zur Drehmomentübertragung mit einem Antriebsorgan gekoppelten oder koppelbaren ersten Primärseite (42a; 42b) und einer gegen die Rückstellwirkung einer ersten Dämpferelementenanordnung (54a; 54b) um eine Drehachse (A) bezüglich der ersten Primärseite (42a; 42b) drehbaren ersten Sekundärseite (52a; 52b) sowie einen zweiten Torsionsschwingungsdämpfer (40a; 40b) mit einer mit der ersten Sekundärseite (52a; 52b) verbundenen zweiten Primärseite (60a; 60b) und einer gegen die Rückstellwirkung einer zweiten Dämpferelementenanordnung (66a; 66b) um die Drehachse (A) bezüglich der zweiten Primärseite (60a; 60b) drehbaren und zur Drehmomentübertragung mit einem Abtriebsorgan (50a; 50b) gekoppelten oder koppelbaren zweiten Sekundärseite (62a; 62b),
- eine Auslenkungsmassenpendelanordnung (36a; 36b), umfassend einen Auslenkungsmassenträger (70a; 70b) und eine Auslenkungsmassenanordnung (75a; 75b) mit wenigstens einer am Auslenkungsmassenträger (70a; 70b) aus einer Neutral-Relativlage auslenkbar getragenen Auslenkungsmasse (74a; 74b),
wobei die erste Dämpferelementenanordnung (54a; 54b) eine Mehrzahl von in Umfangsrichtung aufeinander folgenden und zueinander parallel wirkenden ersten Dämpferelementeneinheiten (56a; 56b) umfasst oder/und dass die zweite Dämpferelementenanordnung (66a; 66b) eine Mehrzahl von in Umfangsrichtung aufeinander folgenden und zueinander parallel wirkenden zweiten Dämpferelementeneinheiten (68a; 68b) umfasst, und
- ein Stützbauteil (86a, 86b), das als radial äußerer Anschlag für die ersten Dämpferelementeneinheiten (56a, 56b) der radial außen liegenden ersten Dämpferelementenanordnung (54a, 54b) dient,
wobei das Stützbauteil (86a, 86b) eine freie Endstruktur (87a, 87b) aufweist, die sich weiter in eine axiale Richtung als die ersten Dämpferelementeneinheiten (56a, 56b) erstreckt,
wobei die radial außen liegende erste Dämpferelementenanordnung (54a, 54b) an einem scheibenartigen Bauteil (83a, 83b) angeordnet ist, **dadurch**
**gekennzeichnet, dass**
das Stützbauteil (86a, 86b) mit dem scheibenartigen Bauteil (83a, 83b) über eine Verbindungsstruktur (85a, 85b) verbunden ist, die auf einer vergleichbaren radialen Höhe liegt wie ein Mittelpunkt der ersten Dämpferelementeneinheiten (56a, 56b).

2. Schwingungsdämpfungsanordnung nach Anspruch 1, wobei zwischen der freien Endstruktur (87a, 87b) und einem Anlagebereich (89a, 89b) des Stützbauteils (86a, 86b) ein Radius ausgebildet ist, der in einem Wertebereich zwischen 2 mm und 20 mm liegt.

3. Schwingungsdämpfungsanordnung nach einem der vorhergehenden Ansprüche, wobei die freie Endstruktur (87a, 87b) einstückig mit dem Stützbauteil (86a, 86b) als Blechteil ausgebildet ist.

4. Schwingungsdämpfungsanordnung nach einem der vorhergehenden Ansprüche, wobei sich die freie Endstruktur (87a, 87b) parallel zu einer axialen Richtung erstreckt.

5. Schwingungsdämpfungsanordnung nach einem der vorhergehenden Ansprüche, wobei ein Innendurchmesser des Stützbauteils (86a, 86b) an einem Ende (87) des Stützbauteils (86a, 86b) kleiner ist als ein Außendurchmesser des scheibenartigen Bauteils (83a, 83b).

6. Schwingungsdämpfungsanordnung nach einem der vorhergehenden Ansprüche, wobei die erste Primärseite (42a, 42b) und die erste Sekundärseite (52a, 52b) ausgebildet sind, um in manchen Betriebszuständen in axialer Richtung aneinander anzuliegen, um zu verhindern, dass die erste Sekundärseite (52a, 52b) eine Gehäuseschale (12a, 12b) berührt.

7. Schwingungsdämpfungsanordnung nach einem der vorhergehenden Ansprüche,, ferner umfassend, ein Deckscheibenelement (100c) für die zweiten Dämpferelementeneinheiten (68a, 68b) der radial innen liegenden zweiten Dämpferelementenanordnung (66a; 66b), wobei das Deckscheibenelement (100c) einen Dämpferelementeneinheitenansteuersteg (101c) mit einem freien Ende (120c) aufweist.

8. Hydrodynamische Kopplungsvorrichtung umfassend eine Schwingungsdämpfungsanordnung (32a, 32b) nach einem der vorhergehenden Ansprüche, die mit einem Turbinenrad (22a, 22b) verbunden ist, in einer radial vergleichbaren Höhe auf der sich ein Mittelpunkt der zweiten Dämpferelementeneinheiten (68a, 68b) der radial innen liegenden zweiten Dämpferelementenanordnung (66b; 66a) befindet.

9. Hydrodynamische Kopplungsvorrichtung nach Anspruch 8, wobei in einem Leitrad (28a, 28b) in axialer Richtung eine Ausnehmung (45a, 45b) zur Aufnahme eines Verbindungsmittels (102a, 102b) vorgesehen ist, das die Schwingungsdämpfungsanordnung (32a, 32b) und das Turbinenrad (22a, 22b) verbindet.

10. Hydrodynamische Kopplungsvorrichtung nach einem der Ansprüche 8 oder 9, ferner umfassend:
eine Überbrückungskupplung (46b), die einen Kupplungskolben (48b) umfasst, mit einer radialen Ausdehnung, die größer ist als ein Radius, auf dem eine radial außen liegende Außenkante (110b) der Auslenkungsmasse (74b) in zumindest einem Betriebszustand liegt.

## Claims

1. Vibration damper assembly (32a; 32b), preferably for the power train of a vehicle, comprising:
- a torsion vibration damper assembly (34a; 34b), comprising a first torsion vibration damper (38; 38a) having a primary side (42a; 42b) which for transmitting torque is coupled, or is able to be coupled, to a drive input member, and a first secondary side (52a; 52b) which in relation to the first primary side (42a; 42b) is rotatable about a rotation axis (A) counter to the restoring effect of a first damper element assembly (54a; 54b), as well as a second torsion vibration damper (40a; 40b) having a second primary side (60a; 60b) which is connected to the first secondary side (52a; 52b), and a second secondary side (62a; 62b) which in relation to the second primary side (60a; 60b) is rotatable about the rotation axis (A) counter to the restoring effect of a second damper element assembly (66a; 66b) and for transmitting torque is coupled, or able to be coupled, to a drive output member (50a; 50b);
- a pendular deflection mass assembly (36a; 36b) comprising a deflection mass support (70a; 70b), and a pendular deflection mass assembly (75a; 75b) having at least one deflection mass (74a; 74b) which is supported on a deflection mass support (70a; 70b) so as to be able to be deflected from a neutral relative position, wherein the first damper element assembly (54a; 54b) comprises a plurality of first damper element units (56a; 56b) which are successive in the circumferential direction and act in a mutually parallel manner, or/and wherein the second damper element assembly (66a; 66b) comprises a plurality of second damper element units (68a; 68b) which are successive in the circumferential direction and act in a mutually parallel manner;
- a support component (86a; 86b) which serves as a radially outer detent for the first damper element units (56a, 56b) of the radially outward first damper element assembly (54a, 54b),
wherein the support component (86a, 86b) has a free end structure (87a, 87b) which in the axial direction extends further than the first damper element units (56a, 56b),
wherein the radially outward first damper element assembly (54a, 54b) is disposed on a disc-type component (83a, 83b),
**characterized in that**
the support component (86a, 86b) is connected to the disc-type component (83a, 83b) by way of a connection structure (85a, 85b) which lies at a radial height comparable to that of a centre of the first damper element units (56a, 56b).

2. Vibration damper assembly according to Claim 1, wherein a radius which lies in a range of values between 2 mm and 20 mm is configured between the free end structure (87a, 87b) and a bearing region (89a, 89b) of the support component (86a, 86b).

3. Vibration damper assembly according to one of the preceding claims, wherein the free end structure (87a, 87b) is configured so as to be integral to the support component (86a, 86b) as a sheet metal part.

4. Vibration damper assembly according to one of the preceding claims, wherein the free end structure (87a, 87b) extends so as to be parallel to an axial direction.

5. Vibration damper assembly according to one of the preceding claims, wherein an internal diameter of the support component (86a, 86b) at one end (87) of the support component (86a, 86b) is smaller than an external diameter of the disc-type component (83a, 83b) .

6. Vibration damper assembly according to one of the preceding claims, wherein the first primary side (42a, 42b) and the first secondary side (52a, 52b) are configured so as to bear on one another in the axial direction in some operating states in order to prevent the first secondary side (52a, 52b) from touching a housing shell (12a, 12b).

7. Vibration damping assembly according to one of the preceding claims, furthermore comprising a cover disc element (100c) for the second damper element units (68a, 68b) of the radially inward second damper element assembly (66a; 66b), wherein the cover disc element (100c) has a damper element unit actuation web (101c) having a free end (120c).

8. Hydrodynamic coupling device comprising a vibration damper assembly (32a, 32b) according to one of the preceding claims, said vibration damper assembly (32a, 32b), at a radial height comparable to that at which a centre of the second damper element units (68a, 68b) of the radially inward second damper element assembly (66b; 66a) is located, being connected to a turbine wheel (22a, 22b).

9. Hydrodynamic coupling device according to Claim 8, wherein a recess (45a, 45b) for receiving a connection means (102a, 102b) is provided in the axial direction in an idler wheel (28a, 28b), said recess (102a, 102b) connecting the vibration damper assembly (32a, 32b) and the turbine wheel (22a, 22b) .

10. Hydrodynamic coupling device according to one of Claims 8 or 9, furthermore comprising:
a lock-up clutch (46b) which comprises a clutch piston (48b), having a radial extent which is larger than a radius on which a radially outward external edge (110b) of the deflection mass (74b) lies in at least one operating state.

## Revendications

1. Agencement d'amortissement de vibrations (32a ; 32b), de préférence pour la chaîne cinématique d'un véhicule, comprenant :
- un agencement d'amortisseurs de torsion (34a ; 34b), comprenant un premier amortisseur de vibrations de torsion (38 ; 38a) avec un premier côté primaire (42a ; 42b) qui est couplé ou qui peut être couplé à un organe d'entraînement pour la transmission d'un couple, et un premier côté secondaire (52a ; 52b) qui peut tourner autour d'un axe de rotation (A) par rapport au premier côté primaire (42a ; 42b), à l'encontre de l'action de rappel d'un premier agencement d'éléments amortisseurs (54a ; 54b), ainsi qu'un deuxième amortisseur de vibrations de torsion (40a ; 40b) avec un deuxième côté primaire (60a ; 60b) relié avec le premier côté secondaire (52a ; 52b), et un deuxième côté secondaire (62a ; 62b) qui est couplé ou qui peut être couplé à un organe d'entraînement (50a ; 50b) pour la transmission d'un couple et qui peut tourner autour de l'axe de rotation (A) par rapport au deuxième côté primaire (60a ; 60b), à l'encontre de l'action de rappel d'un deuxième agencement d'éléments amortisseurs (66a ; 66b),
- un agencement oscillant de masses d'excursion (36a ; 36b), comprenant un porteur de masses d'excursion (70a ; 70b) et un agencement de masses d'excursion (75a ; 75b) avec au moins une masse d'excursion (74a ; 74b) portée sur le porteur de masses d'excursion (70a ; 70b) de manière à pouvoir dévier à partir d'une position relative neutre,
le premier agencement d'éléments amortisseurs (54a ; 54b) comprenant une pluralité de premières unités d'élément amortisseur (56a ; 56b) qui se suivent dans la direction périphérique et qui agissent parallèlement les unes aux autres et/ou le deuxième agencement d'éléments amortisseurs (66a ; 66b) comprenant une pluralité de deuxièmes unités d'élément amortisseur (68a ; 68b) qui se suivent dans la direction périphérique et qui agissent parallèlement les unes aux autres, et
- un composant support (86a, 86b), qui sert de butée radialement extérieure pour les premières unités d'élément amortisseur (56a, 56b) du premier agencement d'éléments amortisseurs situé radialement à l'extérieur (54a, 54b),
le composant support (86a, 86b) comprenant une structure d'extrémité libre (87a, 87b), qui s'étend davantage dans une direction axiale que les premières unités d'élément amortisseur (56a, 56b),
le premier agencement d'éléments amortisseurs situé radialement à l'extérieur (54a, 54b) étant agencé sur un composant de type plaque (83a, 83b),
**caractérisé en ce que**
le composant support (86a, 86b) est relié avec le composant de type plaque (83a, 83b) par l'intermédiaire d'une structure de liaison (85a, 85b), qui est située à une hauteur radiale comparable à un point central des premières unités d'élément amortisseur (56a, 56b).

2. Agencement d'amortissement de vibrations selon la revendication 1, dans lequel un rayon est formé entre la structure d'extrémité libre (87a, 87b) et une zone d'appui (89a, 89b) du composant support (86a, 86b), qui se situe dans une plage de valeurs comprise entre 2 mm et 20 mm.

3. Agencement d'amortissement de vibrations selon l'une quelconque des revendications précédentes, dans lequel la structure d'extrémité libre (87a, 87b) est formée d'un seul tenant avec le composant support (86a, 86b) sous la forme d'une partie de tôle.

4. Agencement d'amortissement de vibrations selon l'une quelconque des revendications précédentes, dans lequel la structure d'extrémité libre (87a, 87b) s'étend parallèlement à une direction axiale.

5. Agencement d'amortissement de vibrations selon l'une quelconque des revendications précédentes, dans lequel un diamètre intérieur du composant support (86a, 86b) au niveau d'une extrémité (87) du composant support (86a, 86b) est inférieur à un diamètre extérieur du composant de type plaque (83a, 83b).

6. Agencement d'amortissement de vibrations selon l'une quelconque des revendications précédentes, dans lequel le premier côté primaire (42a, 42b) et le premier côté secondaire (52a, 52b) sont configurés pour être adjacents l'un à l'autre dans la direction axiale dans certains états d'exploitation afin d'empêcher que le premier côté secondaire (52a, 52b) soit en contact avec une enveloppe de boîtier (12a, 12b).

7. Agencement d'amortissement de vibrations selon l'une quelconque des revendications précédentes, comprenant en outre un élément plaque de recouvrement (100c) pour les deuxièmes unités d'élément amortisseur (68a, 68b) du deuxième agencement d'éléments amortisseurs situé radialement à l'intérieur (66a ; 66b), l'élément plaque de recouvrement (100c) comprenant une traverse de commande d'unité d'élément amortisseur (101c) avec une extrémité libre (120c).

8. Dispositif de couplage hydrodynamique comprenant un agencement d'amortissement de vibrations (32a, 32b) selon l'une quelconque des revendications précédentes, qui est relié avec une roue de turbine (22a, 22b), à une hauteur radialement comparable de celle à laquelle se trouve un point central des deuxièmes unités d'élément amortisseur (68a, 68b) du deuxième agencement d'éléments amortisseurs situé radialement à l'intérieur (66b ; 66a).

9. Dispositif de couplage hydrodynamique selon la revendication 8, dans lequel un évidement (45a, 45b) pour la réception d'un moyen de liaison (102a, 102b) est prévu dans une roue de guidage (28a, 28b) dans la direction axiale, qui relie l'agencement d'amortissement de vibrations (32a, 32b) et la roue de turbine (22a, 22b).

10. Dispositif de couplage hydrodynamique selon l'une quelconque des revendications 8 ou 9, comprenant en outre :
un couplage de pontage (46b), qui comprend un piston de couplage (48b), ayant une extension radiale qui est supérieure à un rayon sur lequel un bord extérieur situé radialement à l'extérieur (110b) de la masse d'excursion (74b) se situe dans au moins un état d'exploitation.
